# EUROPEAN PATENT APPLICATION

(11) **EP 4 730 815 A1**
(43) Date of publication of application: **22.04.2026**
(21) Application number: 24306699.0
(22) Date of filing: 16.10.2024
(51) Int. Cl.: H04N 21/2662, H04N 21/442, H04N 21/6437

(54) **NEGOTIATING THE LEVEL OF DETAIL IN V-DMC**

(71) Applicant: InterDigital CE Patent Holdings, SAS, 75017 Paris (FR)
(72) Inventor: YANG, Hyunsik, LEONIA, 07605 (US); DE FOY, Xavier, KIRKLAND, H9H5K5 (CA); BHULLAR, Gurdeep, MONTREAL, H3C4C9 (CA); GUDUMASU, Srinivas, MONTREAL, H3W 1K9 (CA); MOCQUARD, Olivier, 35000 RENNES (FR); MARVIE, Jean-Eudes, 22190 PLERIN (FR)
(74) Representative: Vossius & Partner Patentanwälte Rechtsanwälte mbB

(57) **Abstract**

Some embodiments of a method may include sending a request to start a V-DMC media stream; receiving a first offer message to start the V-DMC media stream, wherein the first offer message comprises one or more parameters related to level of detail; determining compatibility with the receiver device of the one or more parameters related to level of detail; sending a first answer message based on the determined compatibility; receiving a media stream configured according to a first set of parameters related to level of detail determined to be compatible with the receiver device; sending a second offer message, wherein the second offer message indicates a second set of parameters related to level of detail to be updated; receiving a second answer message indicating which updated parameters were applied; and receiving an adjusted media stream adjusted according to parameters of the second set that were applied.

## Description

### INCORPORATION BY REFERENCE

The present application incorporates by reference in their entirety the following applications: European Patent Application Serial No. EP24306096, entitled "METHODS TO SIGNAL MESH ATTRIBUTES FOR RECONSTRUCTION IN THE V-DMC BITSTREAM" and filed July 3, 2024 (‴096 application").

### BACKGROUND

The present application is related to Video-based Dynamic Mesh Coding (V-DMC).

### SUMMARY

An example method of a receiver device in accordance with some embodiments may include: sending a request to start a V-DMC media stream; receiving a first offer message to start the V-DMC media stream, wherein the first offer message comprises one or more parameters related to level of detail; determining compatibility with the receiver device of the one or more parameters related to level of detail; sending a first answer message based on the determined compatibility; receiving a media stream configured according to a first set of parameters related to level of detail determined to be compatible with the receiver device; sending a second offer message, wherein the second offer message indicates a second set of parameters related to level of detail to be updated; receiving a second answer message indicating which updated parameters were applied; and receiving an adjusted media stream adjusted according to parameters of the second set that were applied.

Some embodiments of the example method may further include sending another level of detail update through re-negotiation.

Some embodiments of the example method may further include performing a dynamic level of detail feedback process using Real Time Control Protocol (RTCP).

In some embodiments of the example method, dynamic level of detail feedback is triggered to be sent by the receiver device.

In some embodiments of the example method, performing the dynamic level of detail feedback process using RTCP comprises sending a level of detail feedback indication message with level of detail parameters.

In some embodiments of the example method, dynamic level of detail feedback is triggered to be sent by a media sender device.

In some embodiments of the example method, performing the dynamic level of detail feedback process using RTCP comprises: receiving a level of detail feedback request message; confirming parameters related to level of detail based on received level of detail parameters; and sending a level of detail feedback response message with requested level of detail parameters.

Some embodiments of the example method may further include receiving a further adjusted media stream adjusted according to the dynamic level of detail feedback.

In some embodiments of the example method, determining compatibility with the receiver device is based on at least one of capacity of the receiver device, user context, receiver application context, and network capacity.

In some embodiments of the example method, the first answer message comprises an indication of compatible parameters.

In some embodiments of the example method, dynamic level of detail feedback corresponds to a particular mesh or submesh.

In some embodiments of the example method, at least one of the second set of parameters related to level of detail to be updated correspond to a particular mesh or submesh.

In some embodiments of the example method, the receiver device is compatible with a Video-based Dynamic Mesh Coding (V-DMC) protocol.

In some embodiments of the example method, the receiver device communicates with a V-DMC media sender device.

### BRIEF DESCRIPTION OF THE DRAWINGS

The following detailed description will be better understood when read in conjunction with the appended drawings, in which there are shown examples of one or more of the multiple embodiments of the present disclosure. It should be understood, however, that the embodiments described herein are not limited to the precise arrangements and instrumentalities shown in the drawings. In the drawings:
FIG. 1A is a system diagram illustrating an example communications system according to some embodiments.
FIG. 1B is a system diagram illustrating an example wireless transmit/receive unit (WTRU) that may be used within the communications system illustrated in FIG. 1A according to some embodiments.
FIG. 1C is a system diagram illustrating an example set of interfaces for a system according to some embodiments.
FIG. 2 is a message sequencing diagram illustrating an example system overview for adjusting the level of detail according to some embodiments.
FIGs. 3A and3B form a message sequencing diagram illustrating an example process for negotiation of level of detail according to some embodiments.
FIG. 4 is a flowchart illustrating an example process for negotiating and adjusting LoD parameters according to some embodiments.

The entities, connections, arrangements, and the like that are depicted in-and described in connection with-the various figures are presented by way of example and not by way of limitation. As such, any and all statements or other indications as to what a particular figure "depicts," what a particular element or entity in a particular figure "is" or "has," and any and all similar statements-that may in isolation and out of context be read as absolute and therefore limiting-may only properly be read as being constructively preceded by a clause such as "In at least one embodiment, ...." For brevity and clarity of presentation, this implied leading clause is not repeated *ad nauseum* in the detailed description.

### DETAILED DESCRIPTION

In describing the various embodiments of the present disclosure, certain terminology is used herein for convenience only and should not be considered as limiting such embodiments. In the drawings, the same reference numerals are employed for designating the same elements throughout the several figures and the present description.

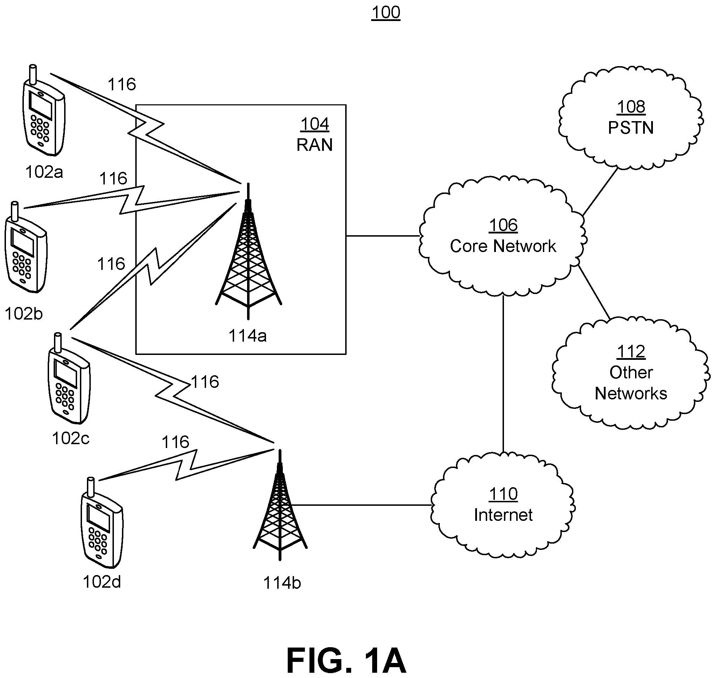

FIG. 1A is a diagram illustrating an example communications system 100 in which one or more disclosed embodiments may be implemented. The communications system 100 may be a multiple access system that provides content, such as voice, data, video, messaging, broadcast, etc., to multiple wireless users. The communications system 100 may enable multiple wireless users to access such content through the sharing of system resources, including wireless bandwidth. For example, the communications systems 100 may employ one or more channel access methods, such as code division multiple access (CDMA), time division multiple access (TDMA), frequency division multiple access (FDMA), orthogonal FDMA (OFDMA), single-carrier FDMA (SC-FDMA), zero-tail unique-word DFT-Spread OFDM (ZT UW DTS-s OFDM), unique word OFDM (UW-OFDM), resource block-filtered OFDM, filter bank multicarrier (FBMC), and the like.

As shown in FIG. 1A, the communications system 100 may include wireless transmit/receive units (WTRUs) 102a, 102b, 102c, 102d, a RAN 104/113, a CN 106, a public switched telephone network (PSTN) 108, the Internet 110, and other networks 112, though it will be appreciated that the disclosed embodiments contemplate any number of WTRUs, base stations, networks, and/or network elements. Each of the WTRUs 102a, 102b, 102c, 102d may be any type of device configured to operate and/or communicate in a wireless environment. By way of example, the WTRUs 102a, 102b, 102c, 102d, any of which may be referred to as a "station" and/or a "STA", may be configured to transmit and/or receive wireless signals and may include a user equipment (UE), a mobile station, a fixed or mobile subscriber unit, a subscription-based unit, a pager, a cellular telephone, a personal digital assistant (PDA), a smartphone, a laptop, a netbook, a personal computer, a wireless sensor, a hotspot or Mi-Fi device, an Internet of Things (IoT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. Any of the WTRUs 102a, 102b, 102c and 102d may be interchangeably referred to as a UE.

The communications systems 100 may also include a base station 114a and/or a base station 114b. Each of the base stations 114a, 114b may be any type of device configured to wirelessly interface with at least one of the WTRUs 102a, 102b, 102c, 102d to facilitate access to one or more communication networks, such as the CN 106, the Internet 110, and/or the other networks 112. By way of example, the base stations 114a, 114b may be a base transceiver station (BTS), a Node-B, an eNode B, a Home Node B, a Home eNode B, a gNB, a NR NodeB, a site controller, an access point (AP), a wireless router, and the like. While the base stations 114a, 114b are each depicted as a single element, it will be appreciated that the base stations 114a, 114b may include any number of interconnected base stations and/or network elements.

The base station 114a may be part of the RAN 104/113, which may also include other base stations and/or network elements (not shown), such as a base station controller (BSC), a radio network controller (RNC), relay nodes, etc. The base station 114a and/or the base station 114b may be configured to transmit and/or receive wireless signals on one or more carrier frequencies, which may be referred to as a cell (not shown). These frequencies may be in licensed spectrum, unlicensed spectrum, or a combination of licensed and unlicensed spectrum. A cell may provide coverage for a wireless service to a specific geographical area that may be relatively fixed or that may change over time. The cell may further be divided into cell sectors. For example, the cell associated with the base station 114a may be divided into three sectors. Thus, in one embodiment, the base station 114a may include three transceivers, i.e., one for each sector of the cell. In an embodiment, the base station 114a may employ multiple-input multiple output (MIMO) technology and may utilize multiple transceivers for each sector of the cell. For example, beamforming may be used to transmit and/or receive signals in desired spatial directions.

The base stations 114a, 114b may communicate with one or more of the WTRUs 102a, 102b, 102c, 102d over an air interface 116, which may be any suitable wireless communication link (e.g., radio frequency (RF), microwave, centimeter wave, micrometer wave, infrared (IR), ultraviolet (UV), visible light, etc.). The air interface 116 may be established using any suitable radio access technology (RAT).

More specifically, as noted above, the communications system 100 may be a multiple access system and may employ one or more channel access schemes, such as CDMA, TDMA, FDMA, OFDMA, SC-FDMA, and the like. For example, the base station 114a in the RAN 104/113 and the WTRUs 102a, 102b, 102c may implement a radio technology such as Universal Mobile Telecommunications System (UMTS) Terrestrial Radio Access (UTRA), which may establish the air interface 116 using wideband CDMA (WCDMA). WCDMA may include communication protocols such as High-Speed Packet Access (HSPA) and/or Evolved HSPA (HSPA+). HSPA may include High-Speed Downlink (DL) Packet Access (HSDPA) and/or High-Speed UL Packet Access (HSUPA).

In an embodiment, the base station 114a and the WTRUs 102a, 102b, 102c may implement a radio technology such as Evolved UMTS Terrestrial Radio Access (E-UTRA), which may establish the air interface 116 using Long Term Evolution (LTE) and/or LTE-Advanced (LTE-A) and/or LTE-Advanced Pro (LTE-A Pro).

In an embodiment, the base station 114a and the WTRUs 102a, 102b, 102c may implement a radio technology such as NR Radio Access , which may establish the air interface 116 using New Radio (NR).

In an embodiment, the base station 114a and the WTRUs 102a, 102b, 102c may implement multiple radio access technologies. For example, the base station 114a and the WTRUs 102a, 102b, 102c may implement LTE radio access and NR radio access together, for instance using dual connectivity (DC) principles. Thus, the air interface utilized by WTRUs 102a, 102b, 102c may be characterized by multiple types of radio access technologies and/or transmissions sent to/from multiple types of base stations (e.g., a eNB and a gNB).

In other embodiments, the base station 114a and the WTRUs 102a, 102b, 102c may implement radio technologies such as IEEE 802.11 (i.e., Wireless Fidelity (WiFi), IEEE 802.16 (i.e., Worldwide Interoperability for Microwave Access (WiMAX)), CDMA2000, CDMA2000 1X, CDMA2000 EV-DO, Interim Standard 2000 (IS-2000), Interim Standard 95 (IS-95), Interim Standard 856 (IS-856), Global System for Mobile communications (GSM), Enhanced Data rates for GSM Evolution (EDGE), GSM EDGE (GERAN), and the like.

The base station 114b in FIG. 1A may be a wireless router, Home Node B, Home eNode B, or access point, for example, and may utilize any suitable RAT for facilitating wireless connectivity in a localized area, such as a place of business, a home, a vehicle, a campus, an industrial facility, an air corridor (e.g., for use by drones), a roadway, and the like. In one embodiment, the base station 114b and the WTRUs 102c, 102d may implement a radio technology such as IEEE 802.11 to establish a wireless local area network (WLAN). In an embodiment, the base station 114b and the WTRUs 102c, 102d may implement a radio technology such as IEEE 802.15 to establish a wireless personal area network (WPAN). In yet another embodiment, the base station 114b and the WTRUs 102c, 102d may utilize a cellular-based RAT (e.g., WCDMA, CDMA2000, GSM, LTE, LTE-A, LTE-A Pro, NR etc.) to establish a picocell or femtocell. As shown in FIG. 1A, the base station 114b may have a direct connection to the Internet 110. Thus, the base station 114b may not be required to access the Internet 110 via the CN 106.

The RAN 104/113 may be in communication with the CN 106, which may be any type of network configured to provide voice, data, applications, and/or voice over internet protocol (VoIP) services to one or more of the WTRUs 102a, 102b, 102c, 102d. The data may have varying quality of service (QoS) requirements, such as differing throughput requirements, latency requirements, error tolerance requirements, reliability requirements, data throughput requirements, mobility requirements, and the like. The CN 106 may provide call control, billing services, mobile location-based services, pre-paid calling, Internet connectivity, video distribution, etc., and/or perform high-level security functions, such as user authentication. Although not shown in FIG. 1A, it will be appreciated that the RAN 104/113 and/or the CN 106 may be in direct or indirect communication with other RANs that employ the same RAT as the RAN 104/113 or a different RAT. For example, in addition to being connected to the RAN 104/113, which may be utilizing a NR radio technology, the CN 106 may also be in communication with another RAN (not shown) employing a GSM, UMTS, CDMA 2000, WiMAX, E-UTRA, or WiFi radio technology.

The CN 106 may also serve as a gateway for the WTRUs 102a, 102b, 102c, 102d to access the PSTN 108, the Internet 110, and/or the other networks 112. The PSTN 108 may include circuit-switched telephone networks that provide plain old telephone service (POTS). The Internet 110 may include a global system of interconnected computer networks and devices that use common communication protocols, such as the transmission control protocol (TCP), user datagram protocol (UDP) and/or the internet protocol (IP) in the TCP/IP internet protocol suite. The networks 112 may include wired and/or wireless communications networks owned and/or operated by other service providers. For example, the networks 112 may include another CN connected to one or more RANs, which may employ the same RAT as the RAN 104/113 or a different RAT.

Some or all of the WTRUs 102a, 102b, 102c, 102d in the communications system 100 may include multi-mode capabilities (e.g., the WTRUs 102a, 102b, 102c, 102d may include multiple transceivers for communicating with different wireless networks over different wireless links). For example, the WTRU 102c shown in FIG. 1A may be configured to communicate with the base station 114a, which may employ a cellular-based radio technology, and with the base station 114b, which may employ an IEEE 802 radio technology.

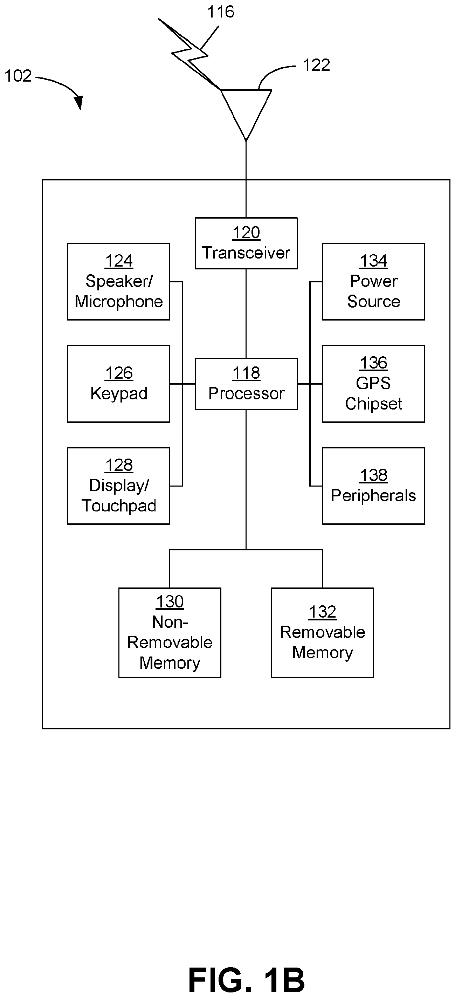

FIG. 1B is a system diagram illustrating an example WTRU 102. As shown in FIG. 1B, the WTRU 102 may include a processor 118, a transceiver 120, a transmit/receive element 122, a speaker/microphone 124, a keypad 126, a display/touchpad 128, non-removable memory 130, removable memory 132, a power source 134, a global positioning system (GPS) chipset 136, and/or other peripherals 138, among others. It will be appreciated that the WTRU 102 may include any sub-combination of the foregoing elements while remaining consistent with an embodiment.

The processor 118 may be a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Arrays (FPGAs) circuits, any other type of integrated circuit (IC), a state machine, and the like. The processor 118 may perform signal coding, data processing, power control, input/output processing, and/or any other functionality that enables the WTRU 102 to operate in a wireless environment. The processor 118 may be coupled to the transceiver 120, which may be coupled to the transmit/receive element 122. While FIG. 1B depicts the processor 118 and the transceiver 120 as separate components, it will be appreciated that the processor 118 and the transceiver 120 may be integrated together in an electronic package or chip.

The transmit/receive element 122 may be configured to transmit signals to, or receive signals from, a base station (e.g., the base station 114a) over the air interface 116. For example, in one embodiment, the transmit/receive element 122 may be an antenna configured to transmit and/or receive RF signals. In an embodiment, the transmit/receive element 122 may be an emitter/detector configured to transmit and/or receive IR, UV, or visible light signals, for example. In yet another embodiment, the transmit/receive element 122 may be configured to transmit and/or receive both RF and light signals. It will be appreciated that the transmit/receive element 122 may be configured to transmit and/or receive any combination of wireless signals.

Although the transmit/receive element 122 is depicted in FIG. 1B as a single element, the WTRU 102 may include any number of transmit/receive elements 122. More specifically, the WTRU 102 may employ MIMO technology. Thus, in one embodiment, the WTRU 102 may include two or more transmit/receive elements 122 (e.g., multiple antennas) for transmitting and receiving wireless signals over the air interface 116.

The transceiver 120 may be configured to modulate the signals that are to be transmitted by the transmit/receive element 122 and to demodulate the signals that are received by the transmit/receive element 122. As noted above, the WTRU 102 may have multi-mode capabilities. Thus, the transceiver 120 may include multiple transceivers for enabling the WTRU 102 to communicate via multiple RATs, such as NR and IEEE 802.11, for example.

The processor 118 of the WTRU 102 may be coupled to, and may receive user input data from, the speaker/microphone 124, the keypad 126, and/or the display/touchpad 128 (e.g., a liquid crystal display (LCD) display unit or organic light-emitting diode (OLED) display unit). The processor 118 may also output user data to the speaker/microphone 124, the keypad 126, and/or the display/touchpad 128. In addition, the processor 118 may access information from, and store data in, any type of suitable memory, such as the non-removable memory 130 and/or the removable memory 132. The non-removable memory 130 may include random-access memory (RAM), read-only memory (ROM), a hard disk, or any other type of memory storage device. The removable memory 132 may include a subscriber identity module (SIM) card, a memory stick, a secure digital (SD) memory card, and the like. In other embodiments, the processor 118 may access information from, and store data in, memory that is not physically located on the WTRU 102, such as on a server or a home computer (not shown).

The processor 118 may receive power from the power source 134, and may be configured to distribute and/or control the power to the other components in the WTRU 102. The power source 134 may be any suitable device for powering the WTRU 102. For example, the power source 134 may include one or more dry cell batteries (e.g., nickel-cadmium (NiCd), nickel-zinc (NiZn), nickel metal hydride (NiMH), lithium-ion (Li-ion), etc.), solar cells, fuel cells, and the like.

The processor 118 may also be coupled to the GPS chipset 136, which may be configured to provide location information (e.g., longitude and latitude) regarding the current location of the WTRU 102. In addition to, or in lieu of, the information from the GPS chipset 136, the WTRU 102 may receive location information over the air interface 116 from a base station (e.g., base stations 114a, 114b) and/or determine its location based on the timing of the signals being received from two or more nearby base stations. It will be appreciated that the WTRU 102 may acquire location information by way of any suitable location-determination method while remaining consistent with an embodiment.

The processor 118 may further be coupled to other peripherals 138, which may include one or more software and/or hardware modules that provide additional features, functionality and/or wired or wireless connectivity. For example, the peripherals 138 may include an accelerometer, an e-compass, a satellite transceiver, a digital camera (for photographs and/or video), a universal serial bus (USB) port, a vibration device, a television transceiver, a hands free headset, a Bluetooth^{®} module, a frequency modulated (FM) radio unit, a digital music player, a media player, a video game player module, an Internet browser, a Virtual Reality and/or Augmented Reality (VR/AR) device, an activity tracker, and the like. The peripherals 138 may include one or more sensors, the sensors may be one or more of a gyroscope, an accelerometer, a hall effect sensor, a magnetometer, an orientation sensor, a proximity sensor, a temperature sensor, a time sensor; a geolocation sensor; an altimeter, a light sensor, a touch sensor, a magnetometer, a barometer, a gesture sensor, a biometric sensor, and/or a humidity sensor.

The WTRU 102 may include a full duplex radio for which transmission and reception of some or all of the signals (e.g., associated with particular subframes for both the UL (e.g., for transmission) and downlink (e.g., for reception) may be concurrent and/or simultaneous. The full duplex radio may include an interference management unit to reduce and or substantially eliminate self-interference via either hardware (e.g., a choke) or signal processing via a processor (e.g., a separate processor (not shown) or via processor 118). In an embodiment, the WTRU 102 may include a half-duplex radio for which transmission and reception of some or all of the signals (e.g., associated with particular subframes for either the UL (e.g., for transmission) or the downlink (e.g., for reception)).

Although the WTRU is described in FIGs. 1A-1B as a wireless terminal, it is contemplated that in certain representative embodiments that such a terminal may use (e.g., temporarily or permanently) wired communication interfaces with the communication network.

In representative embodiments, the other network 112 may be a WLAN.

In view of FIGs. 1A-1B, and the corresponding description, one or more, or all, of the functions described herein may be performed by one or more emulation devices (not shown). The emulation devices may be one or more devices configured to emulate one or more, or all, of the functions described herein. For example, the emulation devices may be used to test other devices and/or to simulate network and/or WTRU functions.

The emulation devices may be designed to implement one or more tests of other devices in a lab environment and/or in an operator network environment. For example, the one or more emulation devices may perform the one or more, or all, functions while being fully or partially implemented and/or deployed as part of a wired and/or wireless communication network in order to test other devices within the communication network. The one or more emulation devices may perform the one or more, or all, functions while being temporarily implemented/deployed as part of a wired and/or wireless communication network. The emulation device may be directly coupled to another device for purposes of testing and/or may performing testing using over-the-air wireless communications.

The one or more emulation devices may perform the one or more, including all, functions while not being implemented/deployed as part of a wired and/or wireless communication network. For example, the emulation devices may be utilized in a testing scenario in a testing laboratory and/or a non-deployed (e.g., testing) wired and/or wireless communication network in order to implement testing of one or more components. The one or more emulation devices may be test equipment. Direct RF coupling and/or wireless communications via RF circuitry (e.g., which may include one or more antennas) may be used by the emulation devices to transmit and/or receive data.

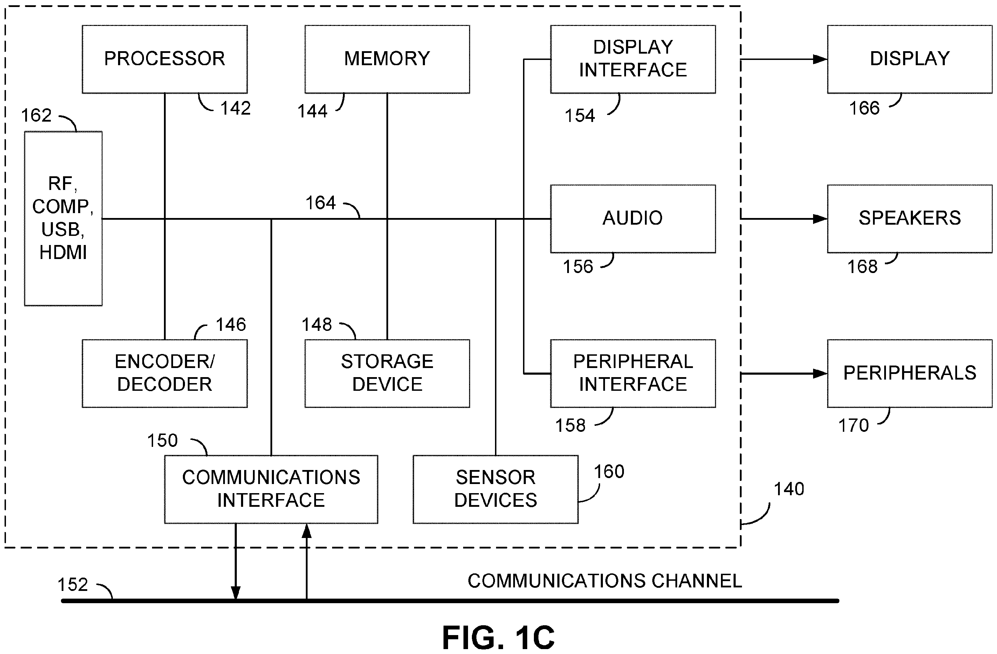

FIG. 1C is a system diagram illustrating an example set of interfaces for a system according to some embodiments. An extended reality display device, together with its control electronics, may be implemented using a system such as the system of FIG. 1C. System 140 can be embodied as a device including the various components described below and is configured to perform one or more of the aspects described in this document. Examples of such devices, include, but are not limited to, various electronic devices such as personal computers, laptop computers, smartphones, tablet computers, digital multimedia set top boxes, digital television receivers, personal video recording systems, connected home appliances, and servers. Elements of system 140, singly or in combination, can be embodied in a single integrated circuit (IC), multiple ICs, and/or discrete components. For example, in at least one embodiment, the processing and encoder/decoder elements of system 140 are distributed across multiple ICs and/or discrete components. In various embodiments, the system 140 is communicatively coupled to one or more other systems, or other electronic devices, via, for example, a communications bus or through dedicated input and/or output ports. In various embodiments, the system 140 is configured to implement one or more of the aspects described in this document.

The system 140 includes at least one processor 142 configured to execute instructions loaded therein for implementing, for example, the various aspects described in this document. Processor 142 may include embedded memory, input output interface, and various other circuitries as known in the art. The system 140 includes at least one memory 144 (e.g., a volatile memory device, and/or a non-volatile memory device). System 140 may include a storage device 148, which can include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random Access Memory (DRAM), Static Random Access Memory (SRAM), flash, magnetic disk drive, and/or optical disk drive. The storage device 148 can include an internal storage device, an attached storage device (including detachable and non-detachable storage devices), and/or a network accessible storage device, as non-limiting examples.

System 140 includes an encoder/decoder module 146 configured, for example, to process data to provide an encoded video or decoded video, and the encoder/decoder module 146 can include its own processor and memory. The encoder/decoder module 146 represents module(s) that can be included in a device to perform the encoding and/or decoding functions. As is known, a device can include one or both of the encoding and decoding modules. Additionally, encoder/decoder module 146 can be implemented as a separate element of system 140 or can be incorporated within processor 142 as a combination of hardware and software as known to those skilled in the art.

Program code to be loaded onto processor 142 or encoder/decoder 146 to perform the various aspects described in this document can be stored in storage device 148 and subsequently loaded onto memory 144 for execution by processor 142. In accordance with various embodiments, one or more of processor 142, memory 144, storage device 148, and encoder/decoder module 146 can store one or more of various items during the performance of the processes described in this document. Such stored items can include, but are not limited to, the input video, the decoded video or portions of the decoded video, the bitstream, matrices, variables, and intermediate or final results from the processing of equations, formulas, operations, and operational logic.

In some embodiments, memory inside of the processor 142 and/or the encoder/decoder module 146 is used to store instructions and to provide working memory for processing that is needed during encoding or decoding. In other embodiments, however, a memory external to the processing device (for example, the processing device can be either the processor 142 or the encoder/decoder module 142) is used for one or more of these functions. The external memory can be the memory 144 and/or the storage device 148, for example, a dynamic volatile memory and/or a non-volatile flash memory. In several embodiments, an external non-volatile flash memory is used to store the operating system of, for example, a television. In at least one embodiment, a fast external dynamic volatile memory such as a RAM is used as working memory for video coding and decoding operations, such as for MPEG-2 (MPEG refers to the Moving Picture Experts Group, MPEG-2 is also referred to as ISO/IEC 13818, and 13818-1 is also known as H.222, and 13818-2 is also known as H.262), HEVC (HEVC refers to High Efficiency Video Coding, also known as H.265 and MPEG-H Part 2), or WC (Versatile Video Coding, a new standard being developed by JVET, the Joint Video Experts Team).

The input to the elements of system 140 can be provided through various input devices as indicated in block 162. Such input devices include, but are not limited to, (i) a radio frequency (RF) portion that receives an RF signal transmitted, for example, over the air by a broadcaster, (ii) a Component (COMP) input terminal (or a set of COMP input terminals), (iii) a Universal Serial Bus (USB) input terminal, and/or (iv) a High Definition Multimedia Interface (HDMI) input terminal. Other examples, not shown in FIG. 1C, include composite video.

In various embodiments, the input devices of block 162 have associated respective input processing elements as known in the art. For example, the RF portion can be associated with elements suitable for (i) selecting a desired frequency (also referred to as selecting a signal, or band-limiting a signal to a band of frequencies), (ii) downconverting the selected signal, (iii) band-limiting again to a narrower band of frequencies to select (for example) a signal frequency band which can be referred to as a channel in certain embodiments, (iv) demodulating the downconverted and band-limited signal, (v) performing error correction, and (vi) demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion can include a tuner that performs various of these functions, including, for example, downconverting the received signal to a lower frequency (for example, an intermediate frequency or a near-baseband frequency) or to baseband. In one set-top box embodiment, the RF portion and its associated input processing element receives an RF signal transmitted over a wired (for example, cable) medium, and performs frequency selection by filtering, downconverting, and filtering again to a desired frequency band. Various embodiments rearrange the order of the above-described (and other) elements, remove some of these elements, and/or add other elements performing similar or different functions. Adding elements can include inserting elements in between existing elements, such as, for example, inserting amplifiers and an analog-to-digital converter. In various embodiments, the RF portion includes an antenna.

Additionally, the USB and/or HDMI terminals can include respective interface processors for connecting system 140 to other electronic devices across USB and/or HDMI connections. It is to be understood that various aspects of input processing, for example, Reed-Solomon error correction, can be implemented, for example, within a separate input processing IC or within processor 142 as necessary. Similarly, aspects of USB or HDMI interface processing can be implemented within separate interface ICs or within processor 142 as necessary. The demodulated, error corrected, and demultiplexed stream is provided to various processing elements, including, for example, processor 142, and encoder/decoder 146 operating in combination with the memory and storage elements to process the datastream as necessary for presentation on an output device.

Various elements of system 140 can be provided within an integrated housing, Within the integrated housing, the various elements can be interconnected and transmit data therebetween using suitable connection arrangement 164, for example, an internal bus as known in the art, including the Inter-IC (I2C) bus, wiring, and printed circuit boards.

The system 140 includes communication interface 150 that enables communication with other devices via communication channel 152. The communication interface 150 can include, but is not limited to, a transceiver configured to transmit and to receive data over communication channel 152. The communication interface 150 can include, but is not limited to, a modem or network card and the communication channel 152 can be implemented, for example, within a wired and/or a wireless medium.

Data is streamed, or otherwise provided, to the system 140, in various embodiments, using a wireless network such as a Wi-Fi network, for example IEEE 802.11 (IEEE refers to the Institute of Electrical and Electronics Engineers). The Wi-Fi signal of these embodiments is received over the communications channel 152 and the communications interface 150 which are adapted for Wi-Fi communications. The communications channel 152 of these embodiments is typically connected to an access point or router that provides access to external networks including the Internet for allowing streaming applications and other over-the-top communications. Other embodiments provide streamed data to the system 140 using a set-top box that delivers the data over the HDMI connection of the input block 162. Still other embodiments provide streamed data to the system 140 using the RF connection of the input block 162. As indicated above, various embodiments provide data in a non-streaming manner. Additionally, various embodiments use wireless networks other than Wi-Fi, for example a cellular network or a Bluetooth network.

The system 140 can provide an output signal to various output devices, including a display 166, speakers 168, and other peripheral devices 170. The display 166 of various embodiments includes one or more of, for example, a touchscreen display, an organic light-emitting diode (OLED) display, a curved display, and/or a foldable display. The display 166 can be for a television, a tablet, a laptop, a cell phone (mobile phone), or other device. The display 166 can also be integrated with other components (for example, as in a smart phone), or separate (for example, an external monitor for a laptop). The other peripheral devices 170 include, in various examples of embodiments, one or more of a stand-alone digital video disc (or digital versatile disc) (DVR, for both terms), a disk player, a stereo system, and/or a lighting system. Various embodiments use one or more peripheral devices 170 that provide a function based on the output of the system 140. For example, a disk player performs the function of playing the output of the system 140.

In various embodiments, control signals are communicated between the system 140 and the display 166, speakers 168, or other peripheral devices 170 using signaling such as AV.Link, Consumer Electronics Control (CEC), or other communications protocols that enable device-to-device control with or without user intervention. The output devices can be communicatively coupled to system 140 via dedicated connections through respective interfaces 154, 156, and 158. Alternatively, the output devices can be connected to system 140 using the communications channel 152 via the communications interface 150. The display 166 and speakers 168 can be integrated in a single unit with the other components of system 140 in an electronic device such as, for example, a television. In various embodiments, the display interface 154 includes a display driver, such as, for example, a timing controller (T Con) chip.

The display 166 and speaker 168 can alternatively be separate from one or more of the other components, for example, if the RF portion of input 162 is part of a separate set-top box. In various embodiments in which the display 166 and speakers 168 are external components, the output signal can be provided via dedicated output connections, including, for example, HDMI ports, USB ports, or COMP outputs.

The system 140 may include one or more sensor devices 160. Examples of sensor devices that may be used include one or more GPS sensors, gyroscopic sensors, accelerometers, light sensors, cameras, depth cameras, microphones, and/or magnetometers. Such sensors may be used to determine information such as user's position and orientation. Where the system 140 is used as the control module for an extended reality display (such as control modules), the user's position and orientation may be used in determining how to render image data such that the user perceives the correct portion of a virtual object or virtual scene from the correct point of view. In the case of head-mounted display devices, the position and orientation of the device itself may be used to determine the position and orientation of the user for the purpose of rendering virtual content. In the case of other display devices, such as a phone, a tablet, a computer monitor, or a television, other inputs may be used to determine the position and orientation of the user for the purpose of rendering content. For example, a user may select and/or adjust a desired viewpoint and/or viewing direction with the use of a touch screen, keypad or keyboard, trackball, joystick, or other input. Where the display device has sensors such as accelerometers and/or gyroscopes, the viewpoint and orientation used for the purpose of rendering content may be selected and/or adjusted based on motion of the display device.

The embodiments can be carried out by computer software implemented by the processor 142 or by hardware, or by a combination of hardware and software. As a non-limiting example, the embodiments can be implemented by one or more integrated circuits. The memory 144 can be of any type appropriate to the technical environment and can be implemented using any appropriate data storage technology, such as optical memory devices, magnetic memory devices, semiconductor-based memory devices, fixed memory, and removable memory, as non-limiting examples. The processor 142 can be of any type appropriate to the technical environment, and can encompass one or more of microprocessors, general purpose computers, special purpose computers, and processors based on a multi-core architecture, as non-limiting examples.

For some embodiments, this application provides a method for adjusting Level of Detail (LoD)-related parameters according to Video-based Dynamic Mesh Coding (V-DMC) bitstream transmission circumstances (such as device capacity) or environment (such as network limitations). In this context, the disclosure explains how Session Description Protocol (SDP) may be utilized during the negotiation process and how Real Time Protocol / Real Time Control Protocol (RTP/RTCP) protocols may be used for message negotiation in scenarios where LoD changes dynamically. This enables efficient V-DMC bitstream transmission while optimizing resource usage, such as network throughput and bandwidth.

Methods and procedures for negotiating optimized data transmission for each stream between the sender and the receiver for some embodiments are presented herein. For some embodiments, the negotiation target includes all parameters related to Level of Detail (LoD), and discussed herein is a method to optimize these parameters for some embodiments according to the media receiver's requirements (e.g., using other mechanisms described herein).

A method to initially and later dynamically negotiate and change the LoD-related parameters according to the receiver's requirements or the current transmission state is presented for some embodiments. This allows for dynamic adjustment of parameters based on changes in the streamed data, in network conditions, or in the receiver conditions.

As understood, methods described herein may efficiently transmit data even in environments where multiple sub-meshes are used, or where frequent changes to LoD parameters are used.

### Negotiate and Select Initial LoD-Related Parameters and Optimize V-DMC Streaming (Sender or Receiver)

The media sender steps also may be used on an intermediate proxy (e.g., a middlebox). If the messages are between a sender and a receiver, there may be multiple receivers in some cases. In those cases, the sender may select the LoD parameters based on lEs sent by multiple receivers (e.g., by providing the highest LoD that is supported by at least one receiver).

### Media Sender Steps

A media sender may perform a 5-step start-up process in some embodiments.

For step 1, the media sender receives a streaming request (e.g., an application layer message) to express the request of a user to start a dynamic mesh media stream.

For step 2, the media sender of dynamic mesh determines the characteristics of the bitstream (e.g., corresponding to different profiles), including parameters associated with a level of detail.

For step 3, the media sender sends an offer message to the receiver with parameters associated with a proposed level of detail such as a "level-of-detail" value, or alternatively one or more detailed iteration count parameters (e.g., asve_subdivision_iteration_count, afve_subdivision_iteration_count, ddu_lod_count, mdu_subdivision_iteration_count, ddu_lod_count)). ASVE stands for Atlas Sequence parameter set V-DMC Extension. AFVE stands for Atlas Frame parameter set V-DMC Extension. The LoD parameters may be based on a priori knowledge, by the media sender, of the media receiver CPU/GPU capacity, of the service type (e.g., 3D conference call, 3D gaming), of network capacity.

For step 4, the media sender receives an answer message from the receiver, including one or more requested Level of Detail (LoD) parameters. The media sender determines the LoD parameters to apply based on the requested LoD parameters. For example, the sender should apply only LoD parameters that may be supported by the stream. The media sender adjusts the data source for the media stream. For some embodiment, the media sender selects a data source that uses the determined LoD parameters. For some embodiment, the sender adjusts the LoD parameters of the encoder. For some embodiment, the sender adjusts the streamed data by removing data for higher LoD. In some cases, the sender may determine LoD-related parameters based on device information (i.e., the receiver). For example, the sender may decide to send LoD-related parameters for appropriate dynamic mesh based on the device's capabilities information from receiver.

For step 5, the media sender sends a media stream based on the parameters negotiated with the receiver, thereby enabling the transmission of data with parameters appropriate for the device's capacity, user and application context, network capacity.

### Media Sender: Update Parameters Steps

A media sender may perform a 4-step update parameter(s) process in some embodiments.

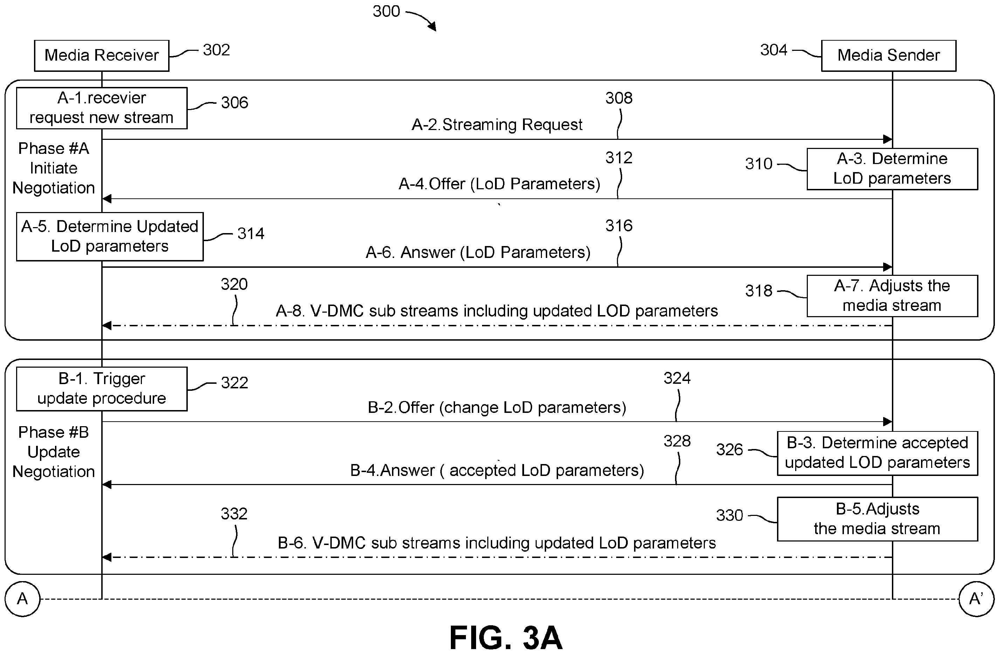

For step 1, the media sender receives a second offer message with updated LoD parameters. This step may be like step B-2 discussed later regarding FIG. 3A.

For step 2, the media sender determines LoD parameters to use in the stream and updates the dynamic mesh media stream parameters based on the request. The step may be like step B-3 discussed later regarding FIG. 3A.

For step 3, the media sender sends an answer message to the receiver.

For step 4, the media sender adjusts stream with updated parameters.

### Media Sender: Dynamic LoD Feedback Steps

When multiple submeshes are used, the sender may transmit data based on the required level of detail (LoD) for each submesh. Moreover, the LoD values for the same object may continuously change, and this may be managed using SDP renegotiation or RTCP.

For example, RTCP messages or enhanced RTCP message may be used to support dynamic Level of Detail (LoD) (e.g., frequent changes to the LoD) in the following scenarios: (1) when the position of an object changes frequently, especially when the positions are at a very different distance from the user; (2) when an object or group of objects experience significant movement; and (3) when the usage of sender resources or transmission-related resources (e.g., network) changes and affects the transmission. In such cases, dynamic LoD feedback procedure may be utilized to dynamically change information for a specific submesh.

A media sender may perform a 4-step dynamic LoD feedback process in some embodiments. For step 1, during streaming, the media sender's application trigger dynamic LoD Contents. For step 2, the media sender sends LoD feedback request message to the receiver. For step 3, the media sender receives the LoD feedback response with requested LoD parameter which determined/confirmed by the receiver. For step 4, the media sender adjusts the media stream and, the media sender streams media based on updated parameter information to the receiver. This process may occur with multiple streams, in which case additional information may be needed to distinguish each stream.

### Receiver Steps

A media receiver may perform a 5-step start-up process in some embodiments. For step 1, the media receiver sends a streaming request (e.g., an application layer message) to express the request of a user to start a dynamic mesh media stream. For step 2, the media receiver receives an offer message from the sender, including parameters related to the Level of Detail (LoD). For step 3, the media receiver determines the appropriate Level of Detail (LoD) based on the device's capacity, user and application context, network capacity. For step 4, the media receiver transmits information about the selected parameters to the media sender via answer message. For step 5, the media receiver receives, from the media sender, the media stream based on the LoD parameters selected by the receiver. This enables the receiver to be provided with media including the appropriate LoD data that may be handled by the receiver.

### Media Receiver: Update Parameters Steps

A media receiver may perform a 3-step update parameters process in some embodiments. In step 1, the media receiver sends an offer message with the updated LoD parameters. In step 2, the media receiver receives updated LoD parameters based on decision of media sender (like steps B-3 and B-4 described later regarding FIG. 3A). In step 3, the media receiver receives updated sub stream., corresponding to the updated LoD parameters.

### Media Receiver: Dynamic LoD Feedback Steps

When multiple submeshes are used, the receiver may request data based on the required level of detail (LoD) for each submesh. Moreover, the LoD values for the same object may continuously change, and this may be managed using SDP renegotiation or RTCP. The receiver may notify the sender of a change in status if the receiver devices' specifications or environment changes.

For example, RTCP messages or enhanced RTCP message may be used to support dynamic Level of Detail (LoD) (e.g., frequent changes to the LoD) in the following scenarios: (1) when optimized data transmission and reception are necessary due to limitations in the receiver's data processing capabilities; and (2) when the usage of transmission-related resources (e.g., network) changes and affects the transmission. In such cases, a dynamic LoD feedback procedure may be utilized to dynamically change information for a specific submesh.

A media receiver may perform a 3-step dynamic LoD feedback process in some embodiments. In step 1, during streaming, the media receiver triggers the dynamic LoD feedback procedure based on logic predefined by the user within the application. In step 2, the receiver sends LoD feedback indication message to the media sender with LoD parameters, which may be triggered by the receiver's application. In step 3, the receiver received stream media based on updated parameter information to the receiver. This process may occur with multiple streams, in which case additional information may be needed to distinguish each stream.

### V-DMC

The advancements in 3D capture, modeling, and rendering have greatly expanded the presence of 3D content across various platforms and devices. 3D models may be represented using point cloud technology, which depicts the model based on points with information such as color and coordinates in 3D space, or using mesh technology, which creates 3D models by representing texture information on sets of triangles. However, when left uncompressed, 3D content may incur considerable costs in terms of storage and transmission. Furthermore, unlike 2D technology, both methods exhibit a characteristic where the data size increases proportionally to the amount of motion when the content is represented through actual video or camera footage. Therefore, MPEG is advancing a new standard, V-DMC, to improve the efficiency of dynamic mesh compression (Text for Committee Draft of ISO/IEC 23090-29: V-DMC, ISO/IEC JTC 1/SC 29/WG 7, 2024.03.15).

The term "dynamic mesh" is used herein to describe mesh-based encoded video, such as V-DMC. The terms V-DMC, dynamic mesh coding, and dynamic mesh are used interchangeably herein.

### Level of Detail (LoD)

LoD is a technique for adjusting the complexity and detail level of a model based on the object's distance to represent it more efficiently. For example, a high-resolution detailed model is used when the object is close, while a low-resolution simplified model is used when the object is far away. Some models may have fewer points that make up the frame, resulting in smaller data sizes. Traditional video resolution simply refers to the number of pixels displayed on the screen, whereas LoD in 3D meshes involves adjusting the complexity of the model itself to improve rendering performance.

2D resolution may be used to adjust the sharpness of an image by controlling the number of pixels displayed on the screen, whereas 3D's LoD optimizes rendering performance by adjusting the complexity of the model (e.g., based on the distance of objects).

3D graphics demand significantly more computational power compared to 2D graphics, requiring high-performance hardware on the client side to handle them. For this reason, dynamically adjusting LoD to optimize system performance and provide users with a smooth experience is crucial.

LoD is a high-level term used to describe the (e.g., visual and/or computational) complexity of an actual object, which may be mapped to low-level parameters. The mapping between high-level LoD and its low-level parameters may vary, e.g., depending on the content creator.

The V3C carriage document defines the LoD index (*Information Technology* - *Coded Representation of Immersive Media* - *Part 10: Carriage of Visual Volumetric Video-Based Coding Data,* ISO/IEC JTC1/SC 29/WG 3). The LoD index identifies a set of Atlas tiles that point to different segments, e.g., where the segments may be part of different layers in a scalable video-coded attribute stream. The LoD index is therefore an example of a high-level LoD parameter. As understood at the time of writing this application, there is no mechanism for associating an LoD index with V-DMC data, such as displacement and base mesh, and there is no mechanism for enabling LoD control and feedback for a V-DMC stream.

### Real-time Transport Protocol (RTP)

RTP is a standard protocol for transmitting real-time voice, video, and data over an IP network. RTP is defined in IETF RFC 3350 "A Transport Protocol for Real-Time Applications". RTP uses RTCP (Real-time Control Protocol) to monitor data transfer status, provide minimum control functions, and media identification. RTP is used in telecommunications and entertainment systems involving streaming media, such as telephony, WebRTC, television services, and video telephony including web-based push-to-talk capabilities. However, for some embodiments, the value of utilization increases only when a separate payload is configured according to the video codec. To this end, several RTP payload standards adapted to the characteristics of specific codecs have been established to enable transmission of audio and video encoded with various codecs in RTP (*RTP: A Transport Protocol for Real-Time Applications,* IETF RFC3550).

### Introduction and Problem Statement

Dynamic mesh coding (e.g., V-DMC) provides compression technology for dynamic meshes. Dynamic mesh coding is used in 3D graphics and virtual reality environments to efficiently compress and transmit mesh data. V-DMC operates using two main components: the base mesh, which represents the original mesh data, and the displacement mesh, which encodes the displacements (changes) needed to reconstruct the mesh based on the base mesh. In addition, a V-DMC bitstream also includes an atlas bitstream, which contains texture information and data necessary for texture mapping based on mesh information, and one or more attribute bitstreams, which include other mesh-related attributes such as color and texture coordinates.

In environments utilizing 3D data, there is a great variety of devices compared to those typically operating in 2D. For example, a 3D mesh may be displayed as a hologram, as a 3D virtual object through goggles, or as a 2D projection on a screen. In the context of dynamic mesh video, the LOD is a parameter that expresses the level of details of mesh objects. The LOD may be useful as an indicator of the amount of data processed by the decoder and the amount of CPU used to render the video. Different player devices have different CPU/GPU capabilities, and they may decode the stream up to a certain LOD, depending on the needs of the application and the current CPU/GPU capacity. The determination of the maximum LOD needed by the receiver may depend on multiple factors: available CPU, user need, application requirements, player capabilities, user pose, user or application context (e.g., another application or object is attracting the attention of the user, away from the 3D video). Therefore, the determination of the LOD required for a stream (either when starting the stream, or dynamically during the media session) may be complex and better handled by the receiver in some cases.

Moreover, in a 3D mesh environment, more CPU/GPU resources are required compared to 2D, and the data size is relatively larger. In other words, depending on the required precision of the 3D mesh, the data size and necessary resources may vary significantly. As mentioned earlier, LoD serves as an abstract metric for this, and relevant information is conveyed through each stream of V-DMC. However, this may sometimes result in unnecessary transmissions, which may pose issues for media transmission (e.g., RTP). For example, if a low LOD is needed by the receiver, higher LOD-related data will still be transmitted, which results in a waste of bandwidth, and, in case of live streaming, in unnecessary CPU usage in the encoder. That is, unoptimized data transmission leads to unnecessary network and computing resource consumption. Therefore, procedures and methods are desired to enable adjusting (when starting a stream) and adapting (during the stream) the LOD that is transmitted by the sender to the receiver. One more consideration is the multiple sub-mesh streams. It is expected that in the future multiple LODs will be supported concurrently in a stream, e.g., for different objects, or for different portions of an object. The sender does not always have the information to adapt the LOD per object in this case, e.g., the LOD may vary depending on user application context, e.g., the direction the user is facing, position of the user, user context outside of the media application, among other things. Therefore, some embodiments also support requesting and adapting multiple LODs corresponding to different objects.

To provide the scalability of LoD, scalable options may be configured for each stream (basemesh, displacement, attribute). The V3C carriage document defines the LoD index as a high-level parameter to provide LoD scalability within the atlas stream. However, to ensure scalability in V-DMC, the same level of scalability is provided for other streams as well. This will require further discussion on additional parameters and negotiation process.

This application describes methods to efficiently transmit mesh data. A media receiver and media sender negotiate LoD parameters (e.g., using SDP), and the media sender sends to the media receiver a media stream that is adjusted to include data that is required for the requested LoD and does not include extra data that would be unused by the media receiver. This behavior enables reducing network and processing resources usage, especially when the source of the media stream supports different LoDs, and when the media receiver currently requires a low LoD because of its capabilities, CPU/GPU usage, or network capacity.

Furthermore, LoD parameters may be adjusted dynamically during the streaming session, based on SDP renegotiation of LoD parameters (e.g., if the rate of change is low) or based on LoD-related RTCP feedback from the receiver (e.g., if the rate of change is high). This behavior enables dynamically adjusting network and processing resources usage over the lifetime of a session, to adapt to changing conditions such as CPU/GPU usage, or network conditions.

Finally, in scenarios where the media stream includes multiple sub-meshes, LoD parameters may be adjusted independently for each sub-mesh. This behavior enables dynamically adjusting network and processing resources usage based on the processing required for each sub-mesh, to achieve the expected QoE.

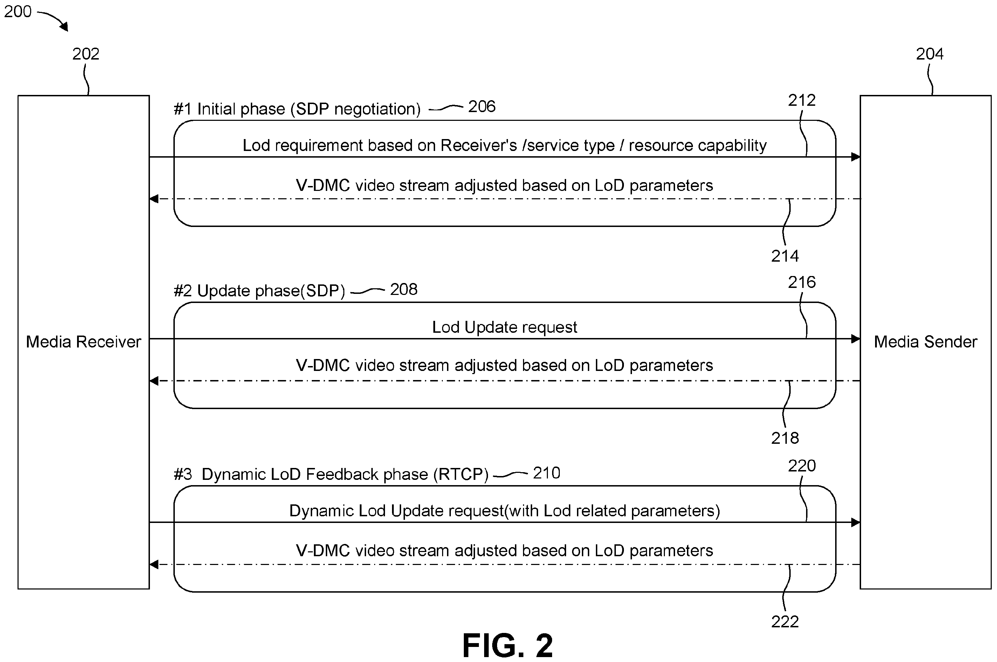

FIG. 2 is a message sequencing diagram illustrating an example system overview for adjusting the level of detail according to some embodiments. FIG. 2 describes the overall process 200 of adjusting the LoD, by the media sender, based on (e.g., SDP) negotiation or (e.g., RTCP) feedback.

A media receiver 202 (e.g., UE, rendering devices) receives media flows, including all sub-stream(s) of the V-DMC. Specification of the (media) receiver 202 may be exposed with a parameter that is related to a profile in the V-DMC specification. The media receiver 202 is based on the media player (e.g., device) capacity, user and application context, and/or network capacity. The media receiver 202 determines a level of detail (LoD). For example, the LoD should not be higher than what the media player may handle (e.g., what its CPU and memory may handle) in the current context (e.g., considering other applications running on the media player device. For example, the LoD may be as low as possible to save network resources, especially in cases where the network resources are limited, such as with mobile devices. For example, the LoD may be set high enough to provide an appropriate QoE for the user, e.g., depending on the user requirements/settings, as well as user context. The context may provoke one or more of the following questions: e.g., Is the user looking at the streamed scene or elsewhere? Are there other scenes/applications shown to the user as well, thereby dividing the attention of the user? Is the lighting condition of the room optimal or poor?

A media sender 204 (also referred to as "sender" herein) is a node that generates and transmits mesh data flows to a receiving node which is called herein a mesh data receiver (also referred to as "receiver" herein). A dynamic mesh media flow (e.g., an RTP or MOQ flow) is composed of mesh data packets (e.g., RTP Packet, MOQ messages, or other media format over an IP packet and/or UDP datagram). The media sender 204 initially determines the LoD based on the encoder capabilities (if applicable), based on the characteristics of the media input (if applicable), based on the a priori knowledge of the media receiver capabilities. If the media sender 204 receives 212 a requested LOD from the receiver 202, the media sender 204 may apply this LoD to the encoder or to the media input if the requested LoD is compatible with the encoder capabilities or media input characteristics. If the media sender 204 receives another request from receiver 202 because of current situation (e.g., about network or receiver device resource usage), the media sender may adjust the LoD of the media stream, e.g., lower or increase it, as needed to maintain an acceptable level of resource usage while providing an appropriate Quality of Service (QoS) / Quality of Experience (QoE).

Dynamic Mesh (e.g., V-DMC) data is composed of four types of sub-streams (base mesh, displacement, attribute, and atlas). Each sub-stream may have parameters related to LoD. Each sub-stream may be transmitted separately or combined, and each type of sub-stream defined in V-DMC may have an RTP payload header. RTP payload formats are described hereinafter, for the base mesh and displacement sub-streams. Existing RTP payload formats exist for attribute (e.g., an RTP header corresponding to an 2D video codec) and atlas (e.g., an RTP header corresponding to an V3C atlas) sub-streams. The media sender 204 may send 214 a V-DMC video stream that is adjusted based on LoD parameters to the media receiver 202.

Adjusting the LoD (Level of Detail) is a technique for adjusting the complexity and detail level of a model based on the object's distance to represent the object more efficiently. For example, a high-resolution, detailed model is used when the object is close, while a low-resolution, simplified model is used when the object is far away. Simpler models have fewer points that make up the frame, resulting in smaller data sizes. Traditional video resolution simply refers to the number of pixels displayed on the screen, whereas LoD in 3D meshes involves adjusting the complexity of the model itself to improve rendering performance. 2D resolution may be used to adjust the sharpness of an image by controlling the number of pixels displayed on the screen, whereas 3D's LoD optimizes rendering performance by adjusting the complexity of the model (e.g., based on the distance of objects). 3D graphics demand significantly more computational power compared to 2D graphics, requiring high-performance hardware on the client side to handle them. For this reason, dynamically adjusting the LoD may optimize system performance and may provide users with a smooth experience.

For some embodiments, the phases for LoD negotiation / adjustment are: (1) initial phase (SDP negotiation) 206; (2) update phase (SDP) 208; and (3) dynamic LoD feedback phase (RTCP) 210.

In SDP negotiation 206, LoD parameters are negotiated using SDP. The media receiver 202 sends 212 LoD requirements based the receiver's "/service type/" resource capability. The media sender 204 adjusts the sub-streams data based on negotiated LoD and sends 214 the sub-streams to the media receiver 202, which decodes and renders the media stream.

For some embodiments, the media receiver 202 sends 216 an LoD update request to the media sender 204. The media sender 204 adjusts and sends 218 a V-DMC video stream that is adjusted based on LoD parameters.

The media receiver 202 provides RTCP feedback 220 to the media sender 204, and the media sender 204 adjusts 222 the LoD accordingly. In scenarios where multiple sub-meshes are present in the stream, the media receiver 202 provides per-sub-mesh RTCP feedback (or uses SDP (re-)negotiation), including per-sub-mesh LoD parameters.

### LoD Parameters

LoD Parameters refer to all the lEs used to control the Level of Detail (LoD).

Exchanged LoD parameters are LoD parameters negotiated between media receiver and media sender. Depending on the update frequency of media-related parameters, an appropriate method for parameter transmission may be defined. For example, SDP may be used for initial setup and infrequent updates, while other protocols, like RTCP, may be used for frequent updates. Exchanged LoD parameters may be any LoD defined hereinafter.

In-stream LoD parameters, such as subdivision counts, iteration counts, attribute component resolution, may be derived from negotiated LoD parameters. In-stream LoD parameters may be used to limit the encoding and/or adjust the encoded bitstreams composing the media stream. For example, a media sender may trim the subdivision counts and iteration counts that are higher than the corresponding in-stream LoD parameters. In another example, a media sender may configure the encoder not to generate data for subdivision counts and iteration counts that are higher than the corresponding in-stream LoD parameters. In yet another example, the media sender may send attribute components with a resolution corresponding to an in-stream LoD parameter. By adjusting these parameters, the desired quality of the mesh, and the desired network usage, may be achieved. In-stream LoD parameters may be any LoD defined hereinafter.

LoD parameters defined within V-DMC include: asve_subdivision_iteration_count, afve_subdivision_iteration_count, mdu_subdivision_iteration_count[tileID][patchIdx], and ddu_lod_count[displlD], The parameter asve_subdivision_iteration_count indicates the number of iterations used for the subdivision of a mesh. The parameter afve_subdivision_iteration_count indicates the number of iterations used for the subdivision of a mesh. The parameter mdu_subdivision_iteration_count[tileID][patchIdx] indicates the number of iterations used for the subdivision in a mesh patch with index patchldx, in the current atlas tile, with tile ID equal to tilelD. The parameter ddu_lod_count[displlD] indicates the number of the subdivision levels used for the displacement signalled in the data unit identified by displld.

Furthermore, LoD parameters understood to be new are defined below. The LoD level (also referred to as "LoD index") is a general indication of a level of detail (e.g., a number). For example, it may be used to request an LoD for a stream and/or a submesh, in an SDP or RTCP message. The sender may use the LoD level to derive other LoD parameters, e.g., to derive in-stream LoD parameters that are used to adjust a media stream. This derivation may be performed using a mapping (e.g., a standard mapping) between the LoD level and values of the in-stream LoD parameters.

The attribute sub-stream resolution indicates the resolution of a (e.g., V-DMC) attribute sub-stream, which conveys properties related to images, such as color. The attribute values are encoded as 2D image pixels and transmitted. The resolution may be adjusted through attribute-related values according to the user-defined Level of Detail (LoD). Notably, attributes are one of the factors that significantly impact the media data size depending on the resolution and should be carefully considered.

The type of sub stream codec allows for selecting a codec for a sub stream, based on the type or characteristics of the data, and the choice of codec may affect the overall resolution and data size. The type of sub stream codec may be represented as a tuple (sub stream type, codec). For example, in base mesh sub-streams, different codecs may be used for static meshes or dynamic meshes. In another example, in atlas sub-streams, codecs using lossless or lossy compression techniques may be applied depending on the current data processing situation (e.g., lossless compression technique may improve QoE but require more processing). In other words, changes in the compression ratio or method through the codec may impact the overall QoE and/or mesh quality.

The overlay mesh ID is an identifier assigned when logically grouping various components (e.g, sub-mesh ID) within V-DMC. The overlay mesh is a higher-level concept than a sub-mesh and includes at least one or more sub-meshes.

The purpose of the overlay mesh ID is to identify on which portion of the stream to apply LoD parameter(s), where portion may be a part of sub-mesh, or may cover multiple sub-meshes. In the V-DMC environment, an example of optimized data transmission provides high resolution only to areas that demand high resolution. To achieve this effect, an identifier capable of distinguishing specific locations is used. While this effect may be managed with the existing submesh ID, a separate logical group is used to selectively manage specific parts based on the purpose. Using this approach, multiple submeshes may be organized into a single logical group, or only parts of a submesh may be included in the group. This approach allows for the configuration of resolution individually for specific areas using an overlay mesh ID.

### LoD Parameters Negotiated Using SDP

LoD parameters are negotiated 212 during the initial setup 206 of a dynamic mesh streaming session (e.g., using a protocol such as SDP). The receiver 202 determines appropriate LoD parameter(s) (e.g., an LoD level) and send a request including the LoD parameter(s), taking into account factors such as device capacity, service type, and current resource usage. For instance, even when delivering the same service, the receiver 202 may request a lower LoD if resource usage is high. Conversely, even when using a high-performance device, the receiver 202 may request a specific LoD level tailored to the service's requirements.

The receiver 202 typically initiates a dynamic mesh streaming session by sending a request to the sender 204 (e.g., an application layer request message). If the receiver 202 supports signaling LoD in SDP, the receiver 202 determines whether to signal LoD with the media sender 204, for this media session. For example, the receiver 202 may be configured not to signal LoD with a specific application, because the application server does not support LoD signaling or because the application server broadcasts to multiple receivers.

For some embodiments, the receiver 202 may be configured to signal LoD with a specific application, because the application server supports LoD signaling and because the application server typically sends separate streams to groups of one or a small number of receivers (e.g., all players in a game session may receive the same stream, or in a one-to-one conversation).

If the receiver 202 determines to signal the LoD with the media sender 204, the receiver 202 may include an LoD indication in the request 212. The LoD indication may indicate that LoD negotiation is supported by the receiver 202. Upon receiving the request 212 including the indication, the sender 204 may determine to include LoD parameters in the offer message. For some embodiments, the receiver 202 does not include an LoD indication in the request 212, and the sender 204 may determine to include LoD parameters in the offer message, e.g., based on the support of LoD negotiation by the sender 204.

An SDP offer and/or answer used in an LoD negotiation procedure includes one or more LoD parameters (LoD parameters and exemplary values are listed below). Upon receiving the request, the media sender sends an offer message (e.g., SDP offer or application layer message) to the receiver, including parameters for the media session. The offer may include LoD parameter(s), which indicate that LoD negotiation is requested, and may provide a requested value for the LoD parameter(s). The sender may determine the requested values of the LoD parameter(s) based on the known capabilities of the receiver or other factors such as values used in previous sessions. The receiver determines the accepted values for LoD parameters to include in the answer message (e.g., SDP answer or application layer message) to the sender, based on desired QoE and/or receiver capabilities. A first method is user-based parameter definition, where the receiver sets the LoD parameters based on the desired QoE. In a second method the receiver defines the parameters based on the current capacity of the receiver (e.g., processing/CPU/GPU, memory or network capacity). The first and second methods may be used concurrently.

The media sender checks if the requested LoD parameters are supported and valid. The media sender may be a media server (e.g., which support adjusting streams for LoD) or a mobile device (e.g., which does not support adjusting streams for LoD) depending on the situation where the 3D mesh is utilized. Therefore, the media sender checks whether it supports adjusting the stream based the requested LoD parameters are supported parameters. For example, in a case where the sender did not include an LoD parameter in the offer message, and where the receiver added an LoD parameter in the answer, the sender may determine to use the LoD parameter if the sender supports adjusting the stream based on LoD, or the sender may determine to ignore the LoD parameter, or to fail the media session, if the sender does not support adjusting the stream based on LoD. Furthermore, the media sender may also check if the requested LoD parameter is valid for the stream source. For example, a source file may include a single LoD, or a fixed number of LoD. In some embodiments, an encoder may be able to encode a single LoD or a fixed number of LoDs, due to software or hardware limitations. The media sender may accept the requested LoD parameters, or the media sender may accept a value based on the requested LoD parameters and sender or source limitations (e.g., a lower LoD level).

The media sender adjusts the media stream based on the answer. The media sender adjusts the media stream based on the LoD parameter(s) in the answer message, and then the media sender streams the adjusted media stream.

To media receiver and/or sender may be middleboxes. The media receiver may or may not be a device that plays the actual content. In some cases, the media receiver may be a middlebox that is not an actual terminal, and that process the media flow (e.g., pre-render, or other types of processing). In some cases, the media sender may be a middlebox that process the media flow (e.g., adjust the media stream to remove unused LoD data).

The media sender may send multiple unicast and broadcast streams. The media sender may send unicast media streams with different characteristic to each receiver, meaning it may send each stream with a different LoD. A single stream sent to a receiver may include one LoD applicable to the whole stream, or several (possibly different) LoDs applicable to different sub-meshes, or several (possibly different) LoDs applicable to different portions of different sub-meshes. The media sender may send a broadcast media stream to multiple receivers. The broadcast stream should be adjusted for the most detailed LoD requested by the receivers. For example, if receiver A requests LoD level 1 and receiver B requests LoD level 2 (2 being more detailed than 1), then the sender should adjust the broadcast stream to A and B, in accordance with LoD level 2, so that receivers A and B may both decode the stream at the desired LoD.

### Media Sender Adjusts Sub-Streams Data Based on Negotiated LoD

As described herein, the receiver triggers the media stream adjustment process to accommodate changes in the receiver or network or to meet new (e.g., QoE) requirements. The receiver sends, to the media sender, a message including LoD parameters related to the desired LoD. The message may be an SDP answer (part of the initial negotiation), an SDP message part of the re-negotiation during the session, an RTCP message providing feedback during the session, or another message (e.g., an application message).

Upon receiving the requested LoD parameters, the media sender verifies the validity of the LoD parameters and adjusts the stream accordingly. During the verification, the media sender checks that the received LoD parameters fall within the supported range of each device. If the LoD parameters are within the supported range, they are accepted. In some cases (e.g., when using RTCP messages as described herein) the media sender may send response message to the receiver. If they are not within the supported range, the media sender may fail the session, repeat the negotiation process, or use LoD parameters that are in range. Once the negotiation is complete, the media sender adjusts the media stream based on the negotiated parameters and transmits the stream. Depending on the identifiers included with the request from the receiver, the media sender may adjust the whole stream either or a portion of the stream (e.g., only portions of the stream corresponding to a sub-mesh ID).

The media sender adjusts the media stream during or after the encoding process. When adjusting during the encoding process, the media sender configures the encoder with in-stream LoD parameters, to generate an output that does not include extra data. For example, the encoder does not generate data corresponding to higher values of LoD subdivision counts than the configured in-stream subdivision counts. For example, the encoder generates and uses attribute sub-streams corresponding to the configured attribute sub-stream resolution. When adjusting after the encoding process, the media sender may read media data from an encoded media file and generate an output stream by trimming extra data from the input file.

### Media Sender Sends Sub-Streams to Media Receiver, Which Decodes and Renders Media Stream

The media sender transmits the adjusted media stream to the media receiver, which decodes and renders the stream. Thanks to the stream adjustment performed by the sender, the receiver has enough information to decode the stream at the requested LoD, and extra data needed for higher LoD is not transmitted between sender and receiver. Transmitting an adjusted media stream allows for a more efficient use of resources by both the media sender and the receiver. Additionally, this switch may reduce the costs associated with the transmission process.

### LoD Parameters are Updated and Re-negotiated Using SDP

LoD parameters may be re-negotiated after the initial setup of a dynamic mesh streaming session (e.g., using a protocol such as SDP). The receiver determines appropriate LoD parameter(s) (e.g., an LoD level) and send a request including the LoD parameter(s), considering factors such as device capacity, service type, and current resource usage. For instance, even when delivering the same service, the receiver may request a lower LoD if resource usage is high. Conversely, even when using a high-performance device, the receiver may request a specific LoD level tailored to the service's requirements.

The receiver typically initiates re-negotiation by sending a request to the sender (e.g., an application layer request message). If the receiver supports signaling LoD in SDP, it determines whether to signal LoD with the media sender, for this media session. For example, the receiver may be configured not to signal LoD with a specific application, because the application server does not support LoD signaling or because the application server broadcasts to multiple receivers. In another example, the receiver may be configured to signal LoD with a specific application, because the application server supports LoD signaling and because the application server typically sends separate streams to groups of one or a small number of receivers (e.g., all players in a game session may receive the same stream, or in a one-to-one conversation).

If the receiver determines to signal LoD with the media sender, the receiver may include an LoD indication in the request. The LoD indication may indicate that LoD negotiation is supported by the receiver. Upon receiving the request including the indication, the sender may determine to include LoD parameters in the offer message. In some cases, the receiver does not include an LoD indication in the request, and the sender may determine to include LoD parameters in the offer message, e.g., based on the support of LoD negotiation by the sender.

An SDP offer and/or answer used in an LoD re-negotiation procedure include one or more LoD parameters (LoD parameters and exemplary values are listed below). Upon receiving the request, the media sender sends an offer message (e.g., SDP offer or application layer message) to the receiver, including changed parameters for the media session. The offer may include LoD parameter(s), which indicate that LoD negotiation is requested, and may provide a requested value for the LoD parameter(s). The sender may determine the requested values of the LoD parameter(s) based on the known capabilities of the receiver or other factors such as values used in previous sessions. The receiver determines the accepted values for LoD parameters to include in the answer message (e.g., SDP answer or application layer message) to the sender, based on desired QoE and/or receiver capabilities. A first method is a user-based parameter definition, where the receiver sets the LoD parameters based on the desired QoE. In a second method, the receiver defines the parameters based on the current capacity of the receiver (e.g., processing/CPU/GPU, memory or network capacity). The first and second methods may be used concurrently.

The media sender checks if the requested LoD parameters are supported and valid. The media sender may be a media server (e.g., which support adjusting streams for LoD) or a mobile device (e.g., which does not support adjusting streams for LoD) depending on the situation where the 3D mesh is utilized. Therefore, the media sender checks whether it supports adjusting the stream based the requested LoD parameters are supported parameters.

For example, in a case where the sender receives offer message from the receiver, and where the LoD parameters in the offer message are available, the sender sends answer message with accepted LoD parameter's information. However, in a case where the LoD parameters couldn't support by the sender, the sender may determine to ignore the LoD parameter, or to fail the media session update(re-negotiation). Furthermore, the media sender may also check if the requested LoD parameter is valid for the stream source. For example, a source file may include a single LoD, or a fixed number of LoD. In another example, an encoder may be able to encode a single LoD or a fixed number of LoDs, due to software or hardware limitations. The media sender may accept the requested LoD parameters, or the media sender may accept a value based on the requested LoD parameters and sender or source limitations (e.g., a lower LoD level).

The media sender adjusts the media stream based on the answer. The media sender adjusts the media stream based on the LoD parameter(s) in the answer message, and then the media sender streams the adjusted media stream.

The media receiver and/or sender may be middleboxes. The media receiver may or may not be a device that plays the actual content. In some cases, the media receiver may be a middlebox that is not an actual terminal, and may process the media flow (e.g., pre-render, or other types of processing). In some cases, the media sender may be a middlebox that processes the media flow (e.g., adjust the media stream to remove unused LoD data).

The media sender may send multiple unicast and broadcast streams. The media sender may send unicast media streams with different characteristic to each receiver, meaning it may send each stream with a different LoD. A single stream sent to a receiver may include one LoD applicable to the whole stream, or several (possibly different) LoDs applicable to different sub-meshes, or several (possibly different) LoDs applicable to different portions of different sub-meshes. The media sender may send a broadcast media stream to multiple receivers. The broadcast stream should be adjusted for the most detailed LoD requested by the receivers. For example, if receiver A requests LoD level 1 and receiver B requests LoD level 2 (2 being more detailed than 1), then the sender should adjust the broadcast stream to A and B, in accordance with LoD level 2, so that receivers A and B may both decode the stream at the desired LoD.

### Media Receiver Provides RTCP-Based LoD Feedback to Media Sender and Media Sender Adjusts LoD

The dynamic LoD feedback procedure during media transmission is described below. This process is used to dynamically optimize data transmission and reception and may occur in situations where desired, e.g., to maintain an overall QoE, to encode/transmit/render a stream with a different LoD. For some embodiments, this process may occur when a specific object occupies a large portion of the screen. For some embodiments, this process may occur when the distance between a specific object and the user changes frequently. For some embodiments, this process may occur when a specific object is zoomed in or out by the user.

For example, if the distance between a specific object and the user changes frequently, the overall QoE may be maintained by providing a slightly lower LoD level for distant objects and a higher LoD level for nearby objects. This approach helps reduce unnecessary data transmission and reception.

The LoD parameters feedback procedure may be triggered by either the media sender or the receiver. Generally, the receiver may request a dynamic LoD feedback due to a lack of resources (e.g., over-utilized CPU/GPU) or specific characteristics of the content (e.g., the user pose changes rapidly, or the user looks at a complex portion of a dynamic scene). The media sender, on the other hand, may trigger dynamic LoD feedback based on the characteristics of the content, or the current device status received from the receiver. However, since dynamic LoD feedback is primarily driven by resource considerations, it is usually triggered by the receiver.

The receiver may initiate dynamic LoD feedback by using its own resources usage ratio (e.g., CPU/GPU, network bandwidth, among other parameters) as metrics. The receiver may continuously transmit various metrics to the media sender using RTCP or, the receiver may set a threshold on its resource usage to trigger dynamic LoD feedback. Dynamic LoD feedback is used when the transmission environment changes more dynamic than usual or need to reallocate resource it due to the resource issue on a receiver.

The media sender may trigger a dynamic LoD feedback process temporarily in the following situations: when the content scene changes dynamically, when high-quality data is required due to user intervention (e.g., when the user pose changes rapidly), or when efficient data transfer is needed based on the receiver's current resource usage received from the receiver.

The dynamic LoD feedback procedure is carried out using RTCP, and the initial setup for RTCP is configured along with the initialization procedure mentioned in FIG. 2 e.g., the SDP offer/response messages may include an indication to use RTCP-based LoD feedback). After the initial negotiation process for sending and receiving RTCP is completed, the dynamic LoD feedback procedure may be initiated at any time by a trigger from either the receiver or the media sender.

The receiver may send an LoD feedback indication RTCP message, which includes LoD parameter(s). The LoD feedback indication RTCP message may be a new RTCP message or may be an enhancement of an existing RTCP message (e.g., an enhanced RTCP RR(Receiver Report) message that also include LoD parameters).

An exemplary LoD feedback indication RTCP message includes: (1) an RTCP header; (2) one or more requested LoD parameter(s); and (3) one or more sub-mesh identifier(s) (if applicable, e.g., to associate one or more LoD parameters with a sub-mesh when using per-submesh LoD feedback).

The sender may send an LoD feedback request RTCP message requesting LoD information from the receiver, and possibly indicating the maximum available LoD. The receiver replies with an LoD feedback response RTCP message. The LoD feedback request and response RTCP messages may be new RTCP messages or may be an enhancement of an existing RTCP messages (e.g., an enhanced RTCP TMMBR that include an LoD indication and/or maximum LoD parameter(s) and TMMBN messages that also include requested LoD parameters).

An exemplary LoD feedback indication request RTCP message includes: (1) an RTCP header; (2) an LoD indication (which requests the message receiver to send requested LoD parameter(s)); (3) one or more maximum LoD parameter(s) (which indicate the maximum values of LoD parameter(s) supported by the stream); and (4) one or more sub-mesh identifier(s) (if applicable).

An exemplary LoD feedback indication response RTCP message includes: (1) an RTCP header; (2) one or more requested LoD parameter(s); and (3) one or more sub-mesh identifier(s) (if applicable).

### When Multiple Sub-Meshes are Present in Stream, Media Receiver Provides Per-Sub-Mesh RTCP Feedback or Uses SDP (Re-)Negotiation Including Per-Sub-Mesh LoD Parameters

The per-submesh dynamic renegotiation process during media transmission is described below. This process is used to dynamically optimize data transmission and reception and may occur in situations where it is desired, e.g., to maintain an overall QoE, to encode/transmit/render different portions of the scene with a different LoD. For example, if a 3D model of a person consists of separate sub-meshes for the body and face, the sub-mesh for the face may temporarily support a higher quality LoD to capture detailed facial movements, while other sub-meshes may be represented at a lower quality LoD.

The per-submesh dynamic LoD feedback procedure is based on the dynamic LoD procedure. LoD parameters are provided for each sub-mesh, along with an identifier of the sub-mesh.

A media sender may provide multiple submeshes and offer differentiated services using identifiers like submesh IDs. When the media sender receives an LoD feedback message, the media sender adjusts the stream of the submesh that is to be changed based on the identifier.

A media receiver may have multiple submeshes and request different levels of LoD for each submesh. The receiver may also request LoD changes for one or more submeshes. At this time, to dynamically request LoD changes for each submesh, the previously mentioned submesh ID is sent along. The submesh ID is unique and consists of an integer. Information about each submesh ID may be obtained from the media description information or the currently playing screen from application. The system may configure various types of LoD-related parameters for each submesh ID.

### Identifying and Marking Most Important Portion of Dynamic Mesh Traffic

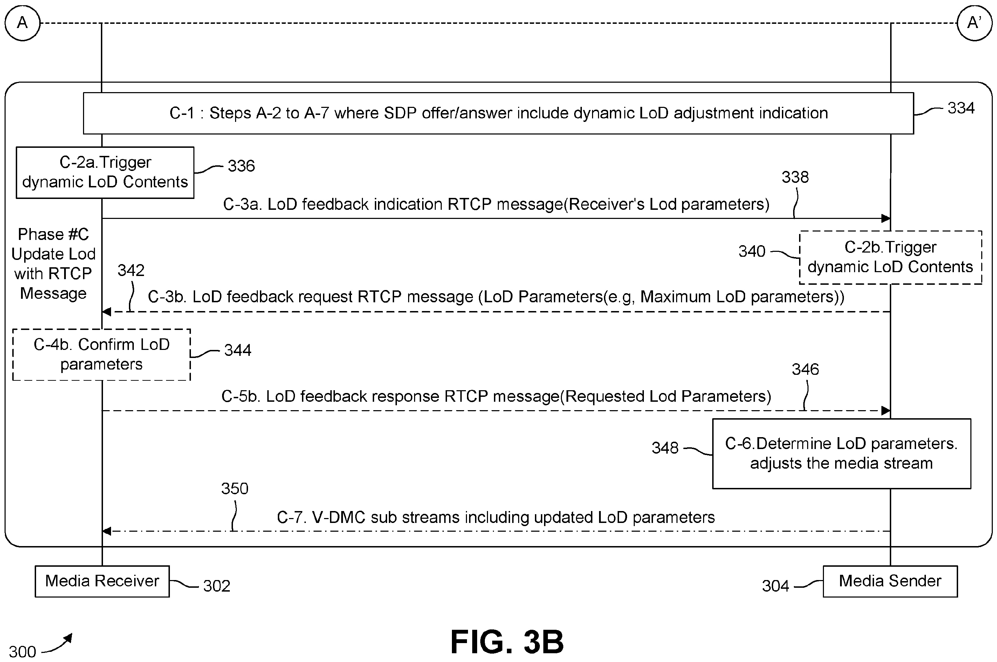

FIGs. 3A and 3B form a message sequencing diagram illustrating an example process for negotiation of level of detail according to some embodiments. Information may be shared between the sender and receiver, and the transmission environment may be configured before transmitting data with per-flow dynamic mesh Transport IEs (e.g., SDP session establishment). The overall procedure 300 of dynamic mesh traffic negotiation is described below.

### Phase A: Exemplary Initial Negotiation

In step A-1 (306), the receiver 302 decides to start a new stream.

In step A-2 (308), the receiver 302 sends a streaming request (e.g., an application layer message) to express the request of a user to start a V-DMC media stream. The request may include an LoD indication.

In step A-3 (310), the sender 304 determines, e.g., based on application logic, a range of characteristics of the streams that may be sent to the receiver 302. The sender 304 determines, based on those characteristics, which associated parameters are related to LoD (e.g., subdivision iteration count,lod_count, among others).

In step A-4 (312), the sender 304 sends an offer message to the receiver 302 with parameters which are related to the level of detail (e.g., asve_subdivision_iteration_count, afve_subdivision_iteration_count, ddu_lod_count, mdu_subdivision_iteration_count, ddu_lod_count, or alternatively a "level-of-detail" value)

In step A-5 (314), the receiver 302 verifies and determines whether the parameters received from the sender 304 are suitable for the current device. The determined parameters are then updated on the device.

In step A-6 (316), the receiver 302 sends an answer message, including appropriate Level of Detail (LoD) parameters based on the device's capacity, user and application context, network capacity. Each LoD parameter defined for each stream may be individually configured at this time.

In step A-7 (318), the sender 304 receives the answer message and adjusts the media stream.

In step A-8 (320), the sender 304 streams media based on the parameters negotiated by the receiver 302, thereby enabling the transmission of data with parameters appropriate for the device's capacity, user and application context, network capacity.

### Phase B: LoD Update Through Re-negotiation

In step B-1 (322), the receiver 302 triggers an update procedure, which may be decided by an application.

In step B-2 (324), the receiver 302 sends an offer message to the sender 304, including information about the parameters that need to be updated.

In step B-3 (326), the sender 304 reviews the update parameter information received from the receiver 302 and determines whether to apply the updates. The determined parameters are then updated in the system.

In step B-4 (328), the sender 304 communicates the updated parameter information to the receiver 302 via an answer message.

In step B-5 (330), the sender 304 adjusts the media stream.

In step B-6 (332), the media sender 304 streams media based on updated parameter information to the receiver 302.

### Phase C: Dynamic LoD Feedback Using RTCP

In this case, RTCP messages may be utilized to dynamically change information for a specific submesh.

Step C-1 (334) corresponds to steps A-2 to A-7 (308, 310, 312, 314, 316, 318).

There are two ways to trigger dynamic LoD contents: by a receiver's application and by a sender's application.

### A: Triggered by Receiver's Application

In step C-2a (336), the application triggers the dynamic LoD feedback procedure based on logic predefined by the user within the application.

In step C-3a (338), the receiver 302 sends LoD feedback indication message to the media sender 304 with LoD parameters, which is triggered by the receiver's application.

In step C-6 (348), the sender 304 adjusts the media stream.

In step C-7 (350), the media sender 304 streams media based on updated parameter information to the receiver 302. This process may occur with multiple streams, in which case additional information may be needed to distinguish each stream.

### B: Triggered by Sender's Application

In step C-2b (340), the sender 304 triggers dynamic LoD content.

In step 3-3b (342), the sender 304 sends LoD feedback request message to the receiver 302.

In step C-4b (344), the receiver 302 determines, e.g., confirms, the LoD parameters based on received LoD parameters from sender 304.

In step C-5b (346), the receiver 302 sends LoD feedback response with requested LoD parameters.

In step C-6 (348), the sender 304 adjusts the media stream.

In step C-7 (350), the media sender 304 streams media based on updated parameter information to the receiver 302. This process may occur with multiple streams, in which case additional information may be needed to distinguish each stream.

### Implementation Example

An exemplary implementation is described herein, which consists of SDP signaling for V-DMC streams, including for displacement and basemesh V-DMC sub-streams. New SDP parameters are defined for base mesh and displacement sub-streams, in addition to existing SDP parameters defined for V3C.

### bmesh-seq-set

The parameter bmesh-seq-set provides an identifier for the base mesh sequence parameter set for reference by other syntax elements defined in [ISO.IEC.23090-29]. The bmesh-seq-set parameter corresponds to bmsps_sequence_parameter_set_id defined in [ISO.IEC.23090-29].

### bmesh-intra-codec

The parameter bmesh-intra-codec indicates a mapping index of a codec identifier of the static mesh decoder used to decode the static base mesh sub bitstream. bmesh-intra-codec shall be in the range of 0 to 255, inclusive defined in [ISO.IEC.23090-29]. The bmesh-intra-codec parameter corresponds to bmsps_intra_mesh_codec_id defined in [ISO.IEC.23090-29].

### bmesh-inter-codec

The parameter bmesh-inter-codec indicates a mapping index of a codec identifier of the decoder used to decode the motion data. bmesh-inter-codec shall be in the range of 0 to 255, inclusive defined in [ISO.IEC.23090-29]. The bmesh-inter-codec parameter corresponds to bmsps_inter_mesh_codec_id defined in [ISO.IEC.23090-29].

### bmesh-level-idc

The parameter bmesh-level-idc indicates a level to which the coded V3C sequence (CVS) conforms. The bmesh-level-idc parameter corresponds to bmptl_level_idc defined in [ISO.IEC.23090-29]

### bmesh-tier-flag

The parameter bmesh-tier-flag specifies the tier context for the interpretation of bmptl_level_idc. The bmesh-tier-flag parameter corresponds to bmptl_tier_flag defined in [ISO.IEC.23090-29].

### bmesh-codec-idc

The parameter bmesh-codec-idc indicates the codec group profile component to which the CVS conforms. The bmesh-codec-idc parameter corresponds to bmptl_profile_codec_group_idc defined in [ISO.IEC.23090-29].

### bmesh-toolset-idc

The parameter bmesh-toolset-idc indicates the toolset combination profile component to which the CVS conforms. The bmesh-toolset-idc parameter corresponds to bmptl_profile toolset idc defined in [ISO.IEC.23090-29].

### vdmc-mdu-sub-idc

The parameter vdmc-mdu-sub-idc indicates the associated submesh ID specified in the current meshpatch with index patchldx, in the current atlas tile with tile ID equal to tilelD. The vdmc-mdu-sub-idc parameter corresponds to mdu_submesh_id defined in [ISO.IEC.23090-29].

The parameter "vdmc-mdu-sub-idc" is used between the sender and receiver when applying different LoD or other attribute options for a specific sub-mesh ID. When the sender or receiver sends a request message, such as for LoD changes, they may include "vdmc-mdu-sub-idc" to identify the area of the change. For example, the receiver may request changes for variables like LoD on a specific sub-mesh using "vdmc-mdu-sub-idc" and the sender may assign variables for a specific sub-mesh through "vdmc-mdu-sub-idc". vdmc-mdu-sub-idc shall be one of afmi_submesh_id[i], where i is in the range 0 to 65535, inclusive.

### vdmc-afmi-sub-idc

The parameter vdmc-afmi-sub-idc specifies the submesh ID of the i-th submesh. The vdmc-afmi-sub-idc parameter corresponds to afmi_submesh_id defined in [ISO.IEC.23090-29]. The usage and examples are the same as for vdmc-mdu-sub-idc.

### vdmc-Iod

The parameter vdmc-lod indicates the level of detail for the V-DMC stream. vdmc-lod is an integer that may be indicated in SDP signalling for base mesh, displacement, atlas, attribute components, and/or may be indicated in session level signalling. The sender may omit from the stream data associated with higher level of details than the level of detail indicated by vdmc-lod. The mapping of vmdc-lod values to detailed LoD parameters (such as asve_subdivision_iteration_count, afve_subdivision_iteration_count, ddu_lod_count, mdu_subdivision_iteration_count, ddu_lod_count) may be standardized or may be determined in an implementation-specific manner. For example, the ranges of values for each detailed LoD parameter may be divided into 4 equal sub-ranges using the minimum value, two intermediate values, and the maximum value, correspond to vdmc-lod values of 0, 1, 2, and 3 respectively.

The parameter vdmc-lod specifies the support for signaling and adjusting the level of detail in the stream, and for example may indicate the maximum value for the LoD index in the Atlas, basemesh, displacement, Attribute and any other V-DMC components. In some system, vmdc-lod may correspond to lod_index in [ISO.IEC.23090-10] and its presence may correspond to "true" for the value of the spatial scalability_enabled flag in [ISO.IEC.23090-10].

### disp-seq-set

The parameter disp-seq-set provides an identifier for the base mesh sequence parameter set for reference by other syntax elements defined in [ISO.IEC.23090-29]. The disp-seq-set parameter corresponds to dsps_sequence_parameter_set_id defined in [ISO.IEC.23090-29].

### disp-codec

The parameter disp-codec indicates the identifier of the codec used to compress the displacement. disp-codec shall be in the range of 0 to 255, inclusive. The disp-codec parameter corresponds to dsps_coded_id defined in [ISO.IEC.23090-29]

### disp-level-idc

The parameter disp_level_idc indicates a level to which the CDS conforms as specified in Annex J.10 of [ISO.IEC.23090-29]. The disp_level_idc parameter corresponds to dptl_level_idc defined in [ISO.IEC.23090-29].

### disp-tier-flag

The parameter disp-tier-flag specifies the tier context for the interpretation of dptl_level_idc as specified in Annex J.10 of [ISO.IEC.23090-29]. The disp-tier-flag parameter corresponds to dptl-tier-flag defined in [ISO.IEC.23090-29].

### disp-codec-idc

The parameter disp-codec-idc indicates the codec group profile component to which the CDS conforms as specified in Annex J.10 of [ISO.IEC.23090-29]. The disp-codec-idc parameter corresponds to dptl_profile_codec_group_idc defined in [ISO.IEC.23090-29].

### disp-toolset-idc

The parameter disp-toolset-idc indicates the toolset combination profile component to which the CDS conforms as specified in Annex J.10 of [ISO.IEC.23090-29]. The disp-toolset-idc parameter corresponds to dptl_profile toolset idc defined in [ISO.IEC.23090-29].

### disp-level-idc

The parameter disp-level-idc indicates a level to which the CDS conforms as specified in Annex J.10 of [ISO.IEC.23090-29]. The disp-level-idc parameter corresponds to dptl level idc defined in [ISO.IEC.23090-29].

### Congestion Control Considerations

In the case of congestion, adjusting the LoD level of each V-DMC stream may help partially mitigate the congestion issue. The substreams that make up V-DMC may independently adjust their LoD (Level of Detail) levels with high level parameters (e.g., vdmc-lod). This parameter is linked to LoD-related parameters defined for each substream, allowing the overall LoD to be fine-tuned. During periods of congestion, a higher LoD level may overload transmitters and/or receivers, while also increasing network bandwidth consumption. To alleviate this, the LoD levels of individual substreams may be adjusted to reduce overall bandwidth usage and improve processing speed. Since each V-DMC substream consumes different amounts of bandwidth, they may be selectively controlled based on the situation.

### Session Description Protocol

This application is understood to comply with and build upon SDP mechanisms defined in [I-D.ietf-avtcore-rtp-v3c], including the "v3cfmtp" attribute and the grouping framework "v3c" type.

### V3C Format Parameters ("v3cfmtp" Attribute)

The "v3cfmtp" SDP attribute is used to carry V3C specific media format parameters, including new media format parameters specific to V-DMC and introduced in this memo.

### Mapping of Payload Type Parameters to SDP

### V-DMC Base Mesh Components

The mapping of the payload format media type (defined above) to the corresponding fields in the Session Description Protocol (SDP) is done according to [RFC8866]. The media name in the "m=" line of SDP is "application". The encoding name in the "a=rtpmap" line of SDP is "MPGBM". The clock rate in the "a=rtpmap" line is "90000". The optional parameters, when present, are included in the "a=fmtp" line of SDP. These parameters are expressed as a media type string as a semicolon-separated list of parameter=value pairs.

The optional parameters sprop-v3c-unit-header, sprop-v3c-unit-type, sprop-v3c-vps-id, sprop-v3c-atlas-id, sprop-v3c-attr-idx, sprop-v3c-attr-part-idx, sprop-v3c-map-idx, sprop-v3c-aux-video-flag, sprop-max-don-diff, sprop-v3c-parameter-set, v3c-ptl-level-idc, v3c-ptl-tier-flag, v3c-ptl-codec-idc, v3c-ptl-toolset-idc, v3c-ptl-rec-idc, bmesh-seq-set, bmesh-intra-codec, bmesh-inter-codec, bmesh-level-idc, bmesh-tier-flag, bmesh-codec-idc, bmesh-toolset-idc , vdmc-mdu-sub-idc, vdmc-afmi-sub-idc, vdmc-lod, when present, are included in the "a=v3cfmtp" line of SDP. These parameters are expressed as a media type string, in the form of a semicolon-separated list of parameter=value pairs.

The optional parameters, when present in the V3C base mesh component media line format parameters attribute, specify values that are valid for the coded V3C sequence until a new value is received in-band. Some optional parameters, like sprop-v3c-parameter-set or sprop-v3c-unit-header, may not be carried in-band in the base mesh stream and may thus be considered static for the session. The carriage of V3C payload format parameters in "a=fmtp" and "a=v3cfmtp" attributes is separated by logical context. The text "a=fmtp" consists of base mesh level media format parameters, and the text "a=v3cfmtp" contains V3C level media format parameters.

Code Listing 1 shows an example of media representation corresponding to the vdmc RTP payload in SDP.

| |
|---|
| ```
 m=application/video 49170 RTP/AVP 98
 a=rtpmap:98 MPGBM/90000
 a=fmtp:98 sprop-vdmc-sm-id=0,1
 a=v3cfmtp:sprop-v3c-unit-header=OAAAAA==;vdmc-lod=1;
 spatial scalability_enabled flag=CAAAAA==
``` |

### Code Listing 1.

### V-DMC Displacement Components

The media name in the "m=" line of SDP is "application". The encoding name in the "a=rtpmap" line of SDP is "MPGDISP". The clock rate in the "a=rtpmap" line is "90000". The optional parameters, when present, are included in the "a=fmtp" line of SDP. These parameters are expressed as a media type string as a semicolon-separated list of parameter=value pairs.

The optional parameters of sprop-v3c-unit-header, sprop-v3c-unit-type, sprop-v3c-vps-id, sprop-v3c-atlas-id, sprop-v3c-attr-idx, sprop-v3c-attr-part-idx, sprop-v3c-map-idx, sprop-v3c-aux-video-flag, sprop-max-don-diff, sprop-v3c-parameter-set, v3c-ptl-level-idc, v3c-ptl-tier-flag, v3c-ptl-codec-idc, v3c-ptl-toolset-idc, v3c-ptl-rec-idc, disp-seq-set, disp-codec, disp-level-idc, disp-tier-flag, disp-codec-idc, disp-toolset-idc, disp-level-idc,dmc-mdu-sub-idc, vdmc-afmi-sub-idc, vdmc-lod, when present, are included in the "a=v3cfmtp" line of SDP. These parameters are expressed as a media type string in the form of a semicolon-separated list of parameter=value pairs.

The optional parameters, when present in the V3C displacement component media line format parameters attribute, specify values that are valid for the coded V3C sequence until a new value is received in-band. Some optional parameters, like sprop-v3c-parameter-set or sprop-v3c-unit-header, cannot be carried in-band in the displacement stream and may be considered static for the session. The carriage of V3C payload format parameters in the "a=fmtp" and "a=v3cfmtp" attributes is separated by logical context. The text "a=fmtp" consists of displacement level media format parameters, and the text "a=v3cfmtp" contains V3C level media format parameters.

Code Listing 2 shows an example of media representation corresponding to the vdmc RTP payload in SDP.

| |
|---|
| ```
 m=application/video 49170 RTP/AVP 98
 a=rtpmap:98 MPGDISP/90000
 a=fmtp:98 sprop-vdmc-sm-id=0,1
 a=v3cfmtp:sprop-v3c-unit-header=GAAAAA==;vdmc-lod=2;
 spatial scalability_enabled flag=CAAAAA==
``` |

### Code Listing 2.

### Offer and Answer Considerations

Code Listing 3 shows an example offer, which allows bundling different V3C components (attribute, base mesh, displacement, atlas) into one stream, based on [RFC9143].

| |
|---|
| ```
  a=group:BUNDLE 1 234
  a=group:vdmc 12 3 4
  m=video 40000 RTP/AVP 96
  a=rtpmap:96 H264/90000
  a=v3cfmtp:sprop-v3c-unit-type=4;sprop-v3c-vps-id=0;vdmc-lod=1;
  sprop-v3c-atlas-id=0
  a=mid:1
  a=extmap:1 urn:ietf:params:rtp-hdrext:sdes:mid
  m=video 40002 RTP/AVP 97
  a=rtpmap:97 MPGBM /90000
  a=v3cfmtp:sprop-v3c-unit-type=7;sprop-v3c-vps-id=0;vdmc-lod=1;
  sprop-v3c-atlas-id=0
  a=mid:2
  a=extmap:1 urn:ietf:params:rtp-hdrext:sdes:mid
  m=video 40004 RTP/AVP 98
  a=rtpmap:98 MPGDISP /90000
  a=v3cfmtp:sprop-v3c-unit-type=3;sprop-v3c-vps-id=0;vdmc-lod=1;
  sprop-v3c-atlas-id=0
  a=mid:3
  a=extmap:1 urn:ietf:params:rtp-hdrext:sdes:mid
  m=application 40006 RTP/AVP 99
  a=rtpmap:99 v3c/90000
  a=v3cfmtp:sprop-v3c-unit-type=1;sprop-v3c-vps-id=0; vdmc-lod=1;
  sprop-v3c-atlas-id=0;
  sprop-v3c-parameter -set=AQD/ AAAP /zw AAAAAADwlAQ5Bw AAOADjgQAADkA==
  a=mid:4
  a=extmap:1 urn:ietf:params:rtp-hdrext:sdes:mid
``` |

### Code Listing 3.

Code Listing 4 shows an example answer. The answer indicates an acceptance of bundling of different V3C components.

| |
|---|
| ```
  a=group:BUNDLE 1 2 3 4
  a=group:vdmc 12 3 4
  m=video 50000 RTP/AVP 96
  a=rtpmap:96 H264/90000
  a=mid:1
  a=extmap:1 urn:ietf:params:rtp-hdrext:sdes:mid
  m=video 0 RTP/AVP 97
  a=rtpmap:97 MPGBM/90000
  a=bundle-only
  a=mid:2
  a=extmap:1 urn:ietf:params:rtp-hdrext:sdes:mid
  m=video 0 RTP/AVP 98
  a=rtpmap:98 MPGDISP/90000
  a=bundle-only
  a=mid:3
  a=extmap:1 urn:ietf:params:rtp-hdrext:sdes:mid
  m=application 0 RTP/AVP 99
  a=rtpmap:99 v3c/90000
  a=bundle-only
  a=mid:4
  a=extmap:1 urn:ietf:params:rtp-hdrext:sdes:mid
``` |

### Code Listing 4.

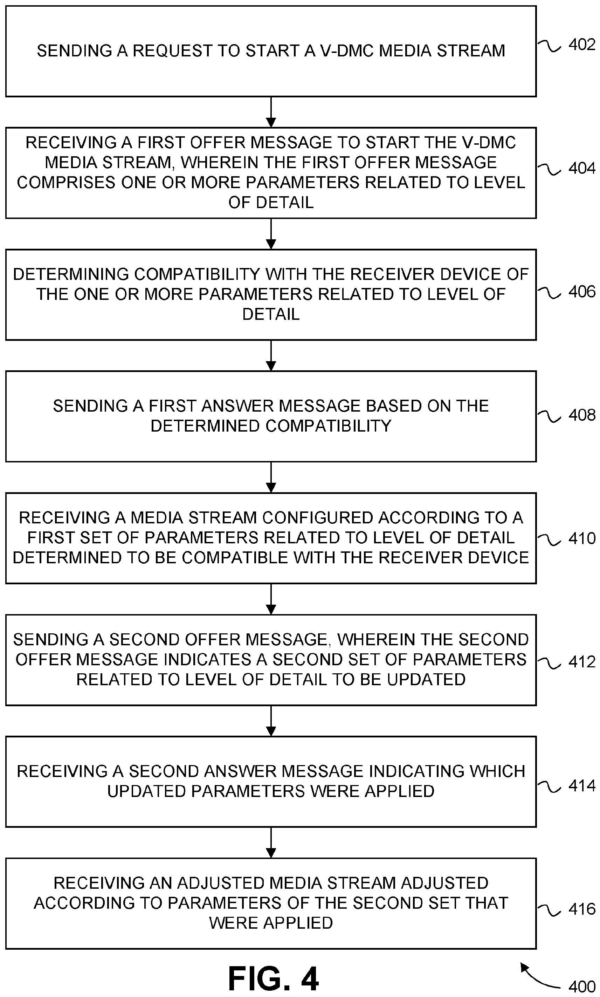

FIG. 4 is a flowchart illustrating an example process for negotiating and adjusting LoD parameters according to some embodiments. For some embodiments, an example process 400 may include sending 402 a request to start a V-DMC media stream. For some embodiments, the example process 400 may further include receiving 404 a first offer message to start the V-DMC media stream, wherein the first offer message comprises one or more parameters related to level of detail. For some embodiments, the example process 400 may further include determining 406 compatibility with the receiver device of the one or more parameters related to level of detail. For some embodiments, the example process 400 may further include sending 408 a first answer message based on the determined compatibility. For some embodiments, the example process 400 may further include receiving 410 a media stream configured according to a first set of parameters related to level of detail determined to be compatible with the receiver device. For some embodiments, the example process 400 may further include sending 412 a second offer message, wherein the second offer message indicates a second set of parameters related to level of detail to be updated. For some embodiments, the example process 400 may further include receiving 414 a second answer message indicating which updated parameters were applied. For some embodiments, the example process 400 may further include receiving 416 an adjusted media stream adjusted according to parameters of the second set that were applied.

An example apparatus in accordance with some embodiments may include at least one processor configured to perform any one of the methods described within this application. An example apparatus in accordance with some embodiments may include a computer-readable medium storing instructions for causing one or more processors to perform any one of the methods described within this application. An example apparatus in accordance with some embodiments may include at least one processor and at least one non-transitory computer-readable medium storing instructions for causing the at least one processor to perform any one of the methods described within this application. An example signal in accordance with some embodiments may include a bitstream generated according to any one of the methods described within this application.

While the methods and systems in accordance with some embodiments are generally discussed in context of extended reality (XR), some embodiments may be applied to any XR contexts such as, e.g., virtual reality (VR) / mixed reality (MR) / augmented reality (AR) contexts. Also, although the term "head mounted display (HMD)" is used herein in accordance with some embodiments, some embodiments may be applied to a wearable device (which may or may not be attached to the head) capable of, e.g., XR, VR, AR, and/or MR for some embodiments.

An example method of a receiver device in accordance with some embodiments may include: sending a request to start a V-DMC media stream; receiving a first offer message to start the V-DMC media stream, wherein the first offer message comprises one or more parameters related to level of detail; determining compatibility with the receiver device of the one or more parameters related to level of detail; sending a first answer message based on the determined compatibility; receiving a media stream configured according to a first set of parameters related to level of detail determined to be compatible with the receiver device; sending a second offer message, wherein the second offer message indicates a second set of parameters related to level of detail to be updated; receiving a second answer message indicating which updated parameters were applied; and receiving an adjusted media stream adjusted according to parameters of the second set that were applied.

Some embodiments of the example method may further include sending another level of detail update through re-negotiation.

Some embodiments of the example method may further include performing a dynamic level of detail feedback process using Real Time Control Protocol (RTCP).

In some embodiments of the example method, dynamic level of detail feedback is triggered to be sent by the receiver device.

In some embodiments of the example method, performing the dynamic level of detail feedback process using RTCP comprises sending a level of detail feedback indication message with level of detail parameters.

In some embodiments of the example method, dynamic level of detail feedback is triggered to be sent by a media sender device.

In some embodiments of the example method, performing the dynamic level of detail feedback process using RTCP comprises: receiving a level of detail feedback request message; confirming parameters related to level of detail based on received level of detail parameters; and sending a level of detail feedback response message with requested level of detail parameters.

Some embodiments of the example method may further include receiving a further adjusted media stream adjusted according to the dynamic level of detail feedback.

In some embodiments of the example method, determining compatibility with the receiver device is based on at least one of capacity of the receiver device, user context, receiver application context, and network capacity.

In some embodiments of the example method, the first answer message comprises an indication of compatible parameters.

In some embodiments of the example method, dynamic level of detail feedback corresponds to a particular mesh or submesh.

In some embodiments of the example method, at least one of the second set of parameters related to level of detail to be updated correspond to a particular mesh or submesh.

In some embodiments of the example method, the receiver device is compatible with a Video-based Dynamic Mesh Coding (V-DMC) protocol.

In some embodiments of the example method, the receiver device communicates with a V-DMC media sender device.

An example apparatus in accordance with some embodiments may include: a processor; and a memory storing instructions operative, when executed by the processor, to cause the apparatus to perform the method of any one of the methods listed above.

One or more embodiments provide a computer program comprising instructions which when executed by one or more processors cause such processors to perform the encoding and/or decoding methods according to any of the embodiments described above. One or more embodiments also provide a computer readable storage medium having stored thereon instructions for encoding or decoding video data according to the methods described above.

One or more embodiments provide a computer readable storage medium having stored thereon video data generated according to the methods described above. One or more embodiments also provide a method and apparatus for transmitting or receiving video data generated according to the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Various numeric values are used in the present application. Such specific values are for example purposes and the embodiments described are not limited to these specific values.

Various methods are described herein, and such methods comprise one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present disclosure may refer to "determining" various pieces of information. Determining information may include one or more of, for example, estimating, calculating, predicting, or retrieving (e.g., from memory) the information.

The present disclosure may refer to "accessing" various pieces of information. Accessing information may include one or more of, for example, receiving, retrieving (e.g., from memory), storing, moving, copying, calculating, determining, predicting, or estimating the information. Similarly, the present disclosure may refer to "receiving" various pieces of information. Receiving information may include one or more of, for example, accessing or retrieving (e.g., from memory) the information.

It is to be understood that use of any of the following "/", "and/or", and "at least one of" is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present disclosure or the following claims. Although features and elements are described herein in particular combinations, those of ordinary skill in the art will appreciate that such features or elements may be used alone or in any combination with the other features and elements. It is understood, therefore, that the overall teachings of the present disclosure are not limited to the particular embodiments, implementations, and examples disclosed herein, but are intended to cover variations, modifications, and alternatives as defined by the appended claims and any and all equivalents thereof.

This disclosure describes a variety of aspects, including tools, features, embodiments, models, approaches, etc. Many of these aspects are described with specificity and, at least to show the individual characteristics, are often described in a manner that may sound limiting. However, this is for purposes of clarity in description, and does not limit the disclosure or scope of those aspects. Indeed, all of the different aspects can be combined and interchanged to provide further aspects. Moreover, the aspects can be combined and interchanged with aspects described in earlier filings as well.

The aspects described and contemplated in this disclosure can be implemented in many different forms. While some embodiments are illustrated specifically, other embodiments are contemplated, and the discussion of particular embodiments does not limit the breadth of the implementations. At least one of the aspects generally relates to video encoding and decoding, and at least one other aspect generally relates to transmitting a bitstream generated or encoded. These and other aspects can be implemented as a method, an apparatus, a computer readable storage medium having stored thereon instructions for encoding or decoding video data according to any of the methods described, and/or a computer readable storage medium having stored thereon a bitstream generated according to any of the methods described.

In the present disclosure, the terms "reconstructed" and "decoded" may be used interchangeably, the terms "pixel" and "sample" may be used interchangeably, the terms "image," "picture" and "frame" may be used interchangeably. Usually, but not necessarily, the term "reconstructed" is used at the encoder side while "decoded" is used at the decoder side.

The terms HDR (high dynamic range) and SDR (standard dynamic range) often convey specific values of dynamic range to those of ordinary skill in the art. However, additional embodiments are also intended in which a reference to HDR is understood to mean "higher dynamic range" and a reference to SDR is understood to mean "lower dynamic range." Such additional embodiments are not constrained by any specific values of dynamic range that might often be associated with the terms "high dynamic range" and "standard dynamic range."

Various methods are described herein, and each of the methods comprises one or more steps or actions for achieving the described method. Unless a specific order of steps or actions is required for proper operation of the method, the order and/or use of specific steps and/or actions may be modified or combined. Additionally, terms such as "first", "second", etc. may be used in various embodiments to modify an element, component, step, operation, etc., such as, for example, a "first decoding" and a "second decoding". Use of such terms does not imply an ordering to the modified operations unless specifically required. So, in this example, the first decoding need not be performed before the second decoding, and may occur, for example, before, during, or in an overlapping time period with the second decoding.

Various numeric values may be used in the present disclosure, for example. The specific values are for example purposes and the aspects described are not limited to these specific values.

Embodiments described herein may be carried out by computer software implemented by a processor or other hardware, or by a combination of hardware and software. As a non-limiting example, the embodiments can be implemented by one or more integrated circuits. The processor can be of any type appropriate to the technical environment and can encompass one or more of microprocessors, general purpose computers, special purpose computers, and processors based on a multi-core architecture, as non-limiting examples.

Various implementations involve decoding. "Decoding", as used in this disclosure, can encompass all or part of the processes performed, for example, on a received encoded sequence in order to produce a final output suitable for display. In various embodiments, such processes include one or more of the processes typically performed by a decoder, for example, entropy decoding, inverse quantization, inverse transformation, and differential decoding. In various embodiments, such processes also, or alternatively, include processes performed by a decoder of various implementations described in this disclosure, for example, extracting a picture from a tiled (packed) picture, determining an upsampling filter to use and then upsampling a picture, and flipping a picture back to its intended orientation.

As further examples, in one embodiment "decoding" refers only to entropy decoding, in another embodiment "decoding" refers only to differential decoding, and in another embodiment "decoding" refers to a combination of entropy decoding and differential decoding. Whether the phrase "decoding process" is intended to refer specifically to a subset of operations or generally to the broader decoding process will be clear based on the context of the specific descriptions.

Various implementations involve encoding. In an analogous way to the above discussion about "decoding", "encoding" as used in this disclosure can encompass all or part of the processes performed, for example, on an input video sequence in order to produce an encoded bitstream. In various embodiments, such processes include one or more of the processes typically performed by an encoder, for example, partitioning, differential encoding, transformation, quantization, and entropy encoding. In various embodiments, such processes also, or alternatively, include processes performed by an encoder of various implementations described in this disclosure.

As further examples, in one embodiment "encoding" refers only to entropy encoding, in another embodiment "encoding" refers only to differential encoding, and in another embodiment "encoding" refers to a combination of differential encoding and entropy encoding. Whether the phrase "encoding process" is intended to refer specifically to a subset of operations or generally to the broader encoding process will be clear based on the context of the specific descriptions.

When a figure is presented as a flow diagram, it should be understood that it also provides a block diagram of a corresponding apparatus. Similarly, when a figure is presented as a block diagram, it should be understood that it also provides a flow diagram of a corresponding method/process.

Various embodiments refer to rate distortion optimization. In particular, during the encoding process, the balance or trade-off between the rate and distortion is usually considered, often given the constraints of computational complexity. The rate distortion optimization is usually formulated as minimizing a rate distortion function, which is a weighted sum of the rate and of the distortion. There are different approaches to solve the rate distortion optimization problem. For example, the approaches may be based on an extensive testing of all encoding options, including all considered modes or coding parameters values, with a complete evaluation of their coding cost and related distortion of the reconstructed signal after coding and decoding. Faster approaches may also be used, to save encoding complexity, in particular with computation of an approximated distortion based on the prediction or the prediction residual signal, not the reconstructed one. A mix of these two approaches can also be used, such as by using an approximated distortion for only some of the possible encoding options, and a complete distortion for other encoding options. Other approaches only evaluate a subset of the possible encoding options. More generally, many approaches employ any of a variety of techniques to perform the optimization, but the optimization is not necessarily a complete evaluation of both the coding cost and related distortion.

The implementations and aspects described herein can be implemented in, for example, a method or a process, an apparatus, a software program, a data stream, or a signal. Even if only discussed in the context of a single form of implementation (for example, discussed only as a method), the implementation of features discussed can also be implemented in other forms (for example, an apparatus or program). An apparatus can be implemented in, for example, appropriate hardware, software, and firmware. The methods can be implemented in, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Reference to "one embodiment" or "an embodiment" or "one implementation" or "an implementation", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this disclosure are not necessarily all referring to the same embodiment.

Additionally, this disclosure may refer to "determining" various pieces of information. Determining the information can include one or more of, for example, estimating the information, calculating the information, predicting the information, or retrieving the information from memory.

Further, this disclosure may refer to "accessing" various pieces of information. Accessing the information can include one or more of, for example, receiving the information, retrieving the information (for example, from memory), storing the information, moving the information, copying the information, calculating the information, determining the information, predicting the information, or estimating the information.

Additionally, this disclosure may refer to "receiving" various pieces of information. Receiving is, as with "accessing", intended to be a broad term. Receiving the information can include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of", for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended for as many items as are listed.

Also, as used herein, the word "signal" refers to, among other things, indicating something to a corresponding decoder. For example, in certain embodiments the encoder signals a particular one of a plurality of parameters for region-based filter parameter selection for de-artifact filtering. In this way, in an embodiment the same parameter is used at both the encoder side and the decoder side. Thus, for example, an encoder can transmit (explicit signaling) a particular parameter to the decoder so that the decoder can use the same particular parameter. Conversely, if the decoder already has the particular parameter as well as others, then signaling can be used without transmitting (implicit signaling) to simply allow the decoder to know and select the particular parameter. By avoiding transmission of any actual functions, a bit savings is realized in various embodiments. It is to be appreciated that signaling can be accomplished in a variety of ways. For example, one or more syntax elements, flags, and so forth are used to signal information to a corresponding decoder in various embodiments. While the preceding relates to the verb form of the word "signal", the word "signal" can also be used herein as a noun.

Implementations can produce a variety of signals formatted to carry information that can be, for example, stored or transmitted. The information can include, for example, instructions for performing a method, or data produced by one of the described implementations. For example, a signal can be formatted to carry the bitstream of a described embodiment. Such a signal can be formatted, for example, as an electromagnetic wave (for example, using a radio frequency portion of spectrum) or as a baseband signal. The formatting can include, for example, encoding a data stream and modulating a carrier with the encoded data stream. The information that the signal carries can be, for example, analog or digital information. The signal can be transmitted over a variety of different wired or wireless links, as is known. The signal can be stored on a processor-readable medium.

We describe a number of embodiments. Features of these embodiments can be provided alone or in any combination, across various claim categories and types. Further, embodiments can include one or more of the following features, devices, or aspects, alone or in any combination, across various claim categories and types:
- Adapting residues at an encoder according to any of the embodiments discussed.
- A bitstream or signal that includes one or more of the described syntax elements, or variations thereof.
- A bitstream or signal that includes syntax conveying information generated according to any of the embodiments described.
- Inserting in the signaling syntax elements that enable the decoder to adapt residues in a manner corresponding to that used by an encoder.
- Creating and/or transmitting and/or receiving and/or decoding a bitstream or signal that includes one or more of the described syntax elements, or variations thereof.
- Creating and/or transmitting and/or receiving and/or decoding according to any of the embodiments described.
- A method, process, apparatus, medium storing instructions, medium storing data, or signal according to any of the embodiments described.
- A TV, set-top box, cell phone, tablet, or other electronic device that performs adaptation of filter parameters according to any of the embodiments described.
- A TV, set-top box, cell phone, tablet, or other electronic device that performs adaptation of filter parameters according to any of the embodiments described, and that displays (e.g. using a monitor, screen, or other type of display) a resulting image.
- A TV, set-top box, cell phone, tablet, or other electronic device that selects (e.g. using a tuner) a channel to receive a signal including an encoded image, and performs adaptation of filter parameters according to any of the embodiments described.
- A TV, set-top box, cell phone, tablet, or other electronic device that receives (e.g. using an antenna) a signal over the air that includes an encoded image, and performs adaptation of filter parameters according to any of the embodiments described.

Note that various hardware elements of one or more of the described embodiments are referred to as "modules" that carry out (i.e., perform, execute, and the like) various functions that are described herein in connection with the respective modules. As used herein, a module includes hardware (e.g., one or more processors, one or more microprocessors, one or more microcontrollers, one or more microchips, one or more application-specific integrated circuits (ASICs), one or more field programmable gate arrays (FPGAs), one or more memory devices) deemed suitable by those of skill in the relevant art for a given implementation. Each described module may also include instructions executable for carrying out the one or more functions described as being carried out by the respective module, and it is noted that those instructions could take the form of or include hardware (i.e., hardwired) instructions, firmware instructions, software instructions, and/or the like, and may be stored in any suitable non-transitory computer-readable medium or media, such as commonly referred to as RAM, ROM, etc.

Although features and elements are described above in particular combinations, one of ordinary skill in the art will appreciate that each feature or element can be used alone or in any combination with the other features and elements. In addition, the methods described herein may be implemented in a computer program, software, or firmware incorporated in a computer-readable medium for execution by a computer or processor. Examples of computer-readable storage media include, but are not limited to, a read only memory (ROM), a random access memory (RAM), a register, cache memory, semiconductor memory devices, magnetic media such as internal hard disks and removable disks, magneto-optical media, and optical media such as CD-ROM disks, and digital versatile disks (DVDs). A processor in association with software may be used to implement a radio frequency transceiver for use in a WTRU, UE, terminal, base station, RNC, or any host computer.

## Claims

1. A method of a receiver device, comprising:
sending a request to start a V-DMC media stream;
receiving a first offer message to start the V-DMC media stream,
wherein the first offer message comprises one or more parameters related to level of detail;
determining compatibility with the receiver device of the one or more parameters related to level of detail;
sending a first answer message based on the determined compatibility;
receiving a media stream configured according to a first set of parameters related to level of detail determined to be compatible with the receiver device;
sending a second offer message,
wherein the second offer message indicates a second set of parameters related to level of detail to be updated;
receiving a second answer message indicating which updated parameters were applied; and
receiving an adjusted media stream adjusted according to parameters of the second set that were applied.

2. The method of claim 1, further comprising sending another level of detail update through re-negotiation.

3. The method of claim 1, further comprising performing a dynamic level of detail feedback process using Real Time Control Protocol (RTCP).

4. The method of claim 3, wherein dynamic level of detail feedback is triggered to be sent by the receiver device.

5. The method of any one of claims 3-4, wherein performing the dynamic level of detail feedback process using RTCP comprises sending a level of detail feedback indication message with level of detail parameters.

6. The method of claim 3, wherein dynamic level of detail feedback is triggered to be sent by a media sender device.

7. The method of any one of claims 3 and 6, wherein performing the dynamic level of detail feedback process using RTCP comprises:
receiving a level of detail feedback request message;
confirming parameters related to level of detail based on received level of detail parameters; and
sending a level of detail feedback response message with requested level of detail parameters.

8. The method of any one of claims 3-7, further comprising receiving a further adjusted media stream adjusted according to the dynamic level of detail feedback.

9. The method of any one of claims 1-8, wherein determining compatibility with the receiver device is based on at least one of capacity of the receiver device, user context, receiver application context, and network capacity.

10. The method of any one of claims 1-9, wherein the first answer message comprises an indication of compatible parameters.

11. The method of any one of claims 1-10, wherein dynamic level of detail feedback corresponds to a particular mesh or submesh.

12. The method of any one of claims 1-11, wherein at least one of the second set of parameters related to level of detail to be updated correspond to a particular mesh or submesh.

13. The method of any one of claims 1-12, wherein the receiver device is compatible with a Video-based Dynamic Mesh Coding (V-DMC) protocol.

14. The method of any one of claims 1-13, wherein the receiver device communicates with a V-DMC media sender device.

15. An apparatus comprising:
a processor; and
a memory storing instructions operative, when executed by the processor, to cause the apparatus to perform the method of any one of claims 1 through 14.
